# EUROPEAN PATENT APPLICATION

(11) **EP 4 852 144 A1**
(43) Date of publication of application: **09.12.2026**
(21) Application number: 26165159.0
(22) Date of filing: 16.03.2026
(51) Int. Cl.: H01M 10/613, A62C 3/16, H01M 10/647, H01M 10/6556, H01M 10/6567, H01M 50/209, H01M 50/342, H01M 50/383

(54) **BATTERY PACK**

(30) Priority: 04.06.2025 KR 20250073038
(71) Applicant: SAMSUNG SDI CO., LTD., Yongin-si, Gyeonggi-do 17084 (KR)
(72) Inventor: LEE, Gi Hun, 16678 Suwon-si (KR); MOON, Young Sik, 16678 Suwon-si (KR); CHOI, Seon Ung, 16678 Suwon-si (KR)
(74) Representative: Marks & Clerk LLP

(57) **Abstract**

A battery pack includes: a pack housing; a battery cell accommodated in the pack housing and including a cell vent on a first side; a cooling module facing a second side of the battery cell and accommodating a refrigerant therein; and a refrigerant trigger located between the battery cell and the cooling module and configured to press the cooling module such that the refrigerant flows out of the cooling module if the battery cell moves toward the cooling module by gas discharged to an outside of the battery cell through the cell vent.

## Description

### BACKGROUND

### 1. Field

Aspects of embodiments of the present disclosure relate to a battery pack.

### 2. Description of the Related Art

In general, with the rapid spread of electronic devices using batteries, such as mobile phones, notebook computers, and electric vehicles, the demand for secondary batteries with high energy density and high capacity has rapidly increased. Accordingly, research and development for improving the performance of lithium secondary batteries is being actively conducted.

A lithium secondary battery is a battery which includes a positive electrode and a negative electrode material, each of which includes an active material capable of intercalating and deintercalating lithium ions, and an electrolyte and in which electrical energy is produced through oxidation and reduction reactions when lithium ions are intercalated/deintercalated into/from the positive electrode and the negative electrode.

Lithium secondary batteries may be used in the form of a battery pack including a plurality of battery cells which are connected in series and/or parallel and a battery management system (BMS) which controls charging and discharging of the plurality of battery cells.

The aforementioned information disclosed in this background section is provided for enhancement of understanding of the background technology of the present disclosure and may contain information that does not constitute the related art.

### SUMMARY

According to an aspect of embodiments of the present disclosure, a battery pack may extinguish a battery cell in which thermal runaway has occurred early such that the thermal runaway of the battery cell does not spread into a large fire.

However, aspects and technical problems to be solved by the present disclosure are not limited to the aspects and problems to be solved described above, and other aspects and problems to be solved that are not described may be clearly understood by those skilled in the art from the description of the invention described below.

According to one or more embodiments, a battery pack includes: a pack housing; a battery cell accommodated (or disposed) in the pack housing and including a cell vent on a first side; a cooling module facing a second side (or disposed to face the other side) of the battery cell and accommodating a refrigerant therein; and a refrigerant trigger located between the battery cell and the cooling module and configured to press the cooling module such that the refrigerant flows out of the cooling module if (or when) the battery cell moves toward the cooling module by gas discharged to an (or the) outside of the battery cell through the cell vent.

The pack housing may include a base including a bottom plate facing (or disposed to face) the cell vent, and a cover coupled to the base, and the cooling module may be located between the battery cell and the cover in the pack housing.

The battery cell may be arranged (or disposed) under the cooling module such that the refrigerant flowing out of the cooling module may pour into the battery cell by gravity.

The cooling module may include a refrigerant channel defining (or forming) a flow path through which the refrigerant flows and including a through hole through which the refrigerant trigger passes, and a membrane that is attached to the refrigerant channel while blocking the through hole and configured to rupture when pressed by the refrigerant trigger.

The refrigerant trigger may include a refrigerant trigger flow path through which a fluid may flow therein, and the refrigerant may be discharged to the outside of the refrigerant channel through the refrigerant trigger flow path when the membrane ruptures by the refrigerant trigger.

The refrigerant channel may comprise a metal plate. A thickness of the membrane may be thinner than a thickness of the metal plate.

The battery pack may comprise a plurality of battery cells. A plurality of refrigerant triggers may be arranged (or installed) for each of the battery cells. The cooling module may comprise a number of membranes corresponding one-to-one to the plurality of refrigerant triggers.

The cooling module may include a refrigerant channel defining (or forming) a flow path through which the refrigerant flows and including a through hole through which the refrigerant trigger passes, and a membrane that is attached to the refrigerant channel while blocking the through hole and is configured to be separated from the refrigerant channel when pressed by the refrigerant trigger.

The battery cell may further include a hexahedral-shaped case and a terminal protruding from the case, the refrigerant trigger may be fixed to one of six surfaces of the case facing the cooling module, the cell vent and the terminal may be arranged (or disposed or located) on another surface parallel to the one of the six surfaces of the case and located (or arranged or disposed) farther from the cooling module than the one surface.

The battery cell may further include a hexahedral-shaped case and a terminal protruding from one of six surfaces of the case facing the cooling module, the cell vent may be arranged (or disposed or located) on another surface parallel to the one of the six surfaces of the case and located (or arranged or disposed) farther from the cooling module than the one surface, the battery pack may further include a bus bar coupled to the terminal, and the refrigerant trigger may be fixed to the bus bar and may protrude toward the cooling module.

The battery pack may further include a cooling plate facing the another surface (or disposed to face the other surface) and configured to absorb heat from the battery cell.

The battery pack may further include a fire extinguishing agent supplier (or supply unit) in which a fire extinguishing agent is accommodated; and a fire extinguishing agent trigger that is located between the battery cell and the fire extinguishing agent supplier (or supply unit) and configured to press the fire extinguishing agent supplier (or supply unit) such that the fire extinguishing agent flows out of the fire extinguishing agent supplier (or supply unit) if the battery cell moves toward the cooling module by gas discharged to the outside of the battery cell through the cell vent.

The cooling module may include the fire extinguishing agent supplier (or supply unit).

The fire extinguishing agent supplier (or supply unit) may include a fire extinguishing agent channel defining (or forming) a flow path through which the fire extinguishing agent flows and including a through hole through which the fire extinguishing agent trigger passes, and a membrane attached to the fire extinguishing agent channel while blocking the through hole and configured to rupture when pressed by the fire extinguishing agent trigger.

The fire extinguishing agent trigger may include a fire extinguishing agent trigger flow path through which a fluid may flow therein, and the fire extinguishing agent may be discharged to an (or the) outside of the fire extinguishing agent channel through the fire extinguishing agent trigger flow path if the membrane ruptures by the fire extinguishing agent trigger.

The fire extinguishing agent channel may comprise a metal plate. A thickness of the membrane of the fire extinguishing agent supplier (or supply unit) may be thinner than a thickness of the metal plate.

A plurality of fire extinguishing agent channels may be provided to be spaced apart from each other, the cooling module may include a plurality of refrigerant channels that are (provided) spaced apart and form a flow path through which the refrigerant flows, and the plurality of fire extinguishing agent channels and the plurality of refrigerant channels may be alternately arranged.

The cooling module may comprise a connecting portion that connects a pair of refrigerant channels spaced apart with the fire extinguishing agent channel therebetween. The connecting portion may include a connecting portion through hole arranged (or disposed) in a straight line with the through hole of the fire extinguishing agent channel such that the fire extinguishing agent trigger passes therethrough.

The battery cell may further include a hexahedral-shaped case and a terminal protruding from one of six surfaces of the case facing the fire extinguishing agent supplier (or supply unit), the cell vent may be arranged (or disposed) on another surface parallel to the one of the six surfaces of the case and located (or disposed) farther from the fire extinguishing agent supplier (or supply unit) than the one surface, the battery pack may further include a bus bar coupled to the terminal, and the fire extinguishing agent trigger may be fixed to the bus bar and may protrude toward the cooling module.

At least some of the above and other features of the invention are set out in the claims.

### BRIEF DESCRIPTION OF THE DRAWINGS

The above and other aspects, objects, features and advantages of the present disclosure will become more apparent to those of ordinary skill in the art by describing some embodiments thereof in further detail with reference to the accompanying drawings, in which:
FIG. 1 is an exploded perspective view of a battery pack according to an embodiment of the present disclosure;
FIG. 2 is a perspective view of a cell stack in FIG. 1;
FIG. 3 is a perspective view of a battery cell included in the battery pack of FIG. 1;
FIG. 4 is a longitudinal cross-sectional view of the battery cell of FIG. 3;
FIG. 5 is an exploded perspective view of an electrode assembly in FIG. 4;
FIG. 6 is a cross-sectional view of the battery pack of FIG. 1 taken along the line S1-S1;
FIG. 7 is a cross-sectional view of the battery pack in FIG. 6 taken along the line S2-S2;
FIG. 8 is an enlarged view of a region "A" in FIG. 6, and is a view showing a state in which a membrane ruptures;
FIG. 9 is an enlarged view of a region "B" in FIG. 6, and is a view showing a state in which the membrane ruptures;
FIG. 10 is a perspective view of a battery cell included in a battery pack according to another embodiment of the present disclosure;
FIG. 11 is a longitudinal cross-sectional view of a battery pack including the battery cell of FIG. 10;
FIG. 12 is an enlarged view of a region "C" in FIG. 11, and is a view showing a state in which a membrane ruptures;
FIG. 13 is an enlarged view of a region "D" in FIG. 11, and is a view showing a state in which the membrane ruptures;
FIG. 14 is a longitudinal cross-sectional view of a battery pack according to another embodiment of the present disclosure;
FIG. 15 is an enlarged view of a region "E" in FIG. 14, and is a view showing a state in which a membrane ruptures;
FIG. 16 is an enlarged view of a region "F" in FIG. 14, and is a view showing a state in which the membrane ruptures;
FIG. 17 is a cross-sectional view of a refrigerant trigger in FIG. 14;
FIG. 18 is a cross-sectional view showing a modified example of the refrigerant trigger in FIG. 14, and is a view showing a state in which the membrane ruptures; and
FIG. 19 is a cross-sectional view showing another modified example of the refrigerant trigger in FIG. 14, and is a view showing a state in which the membrane ruptures.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein are to be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. .

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

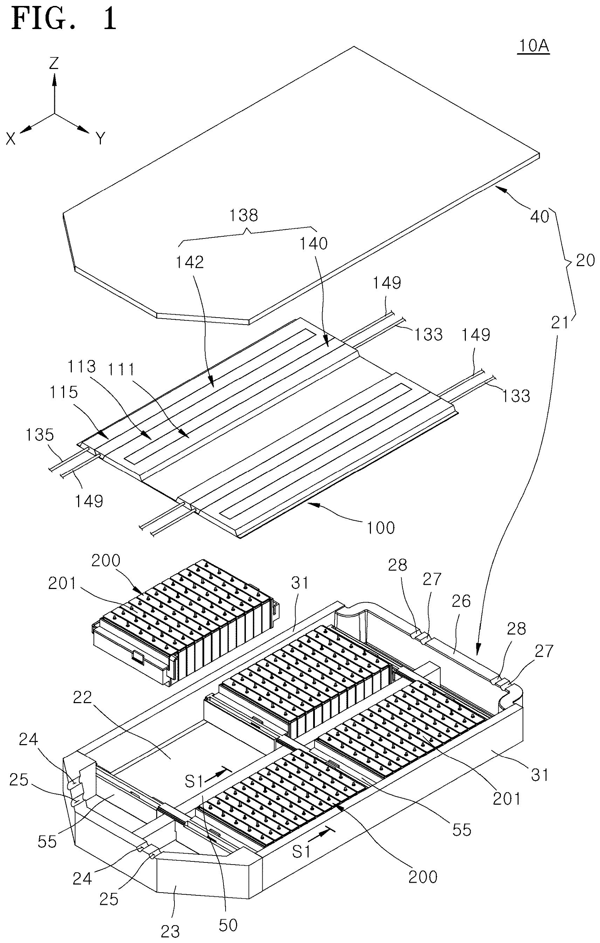

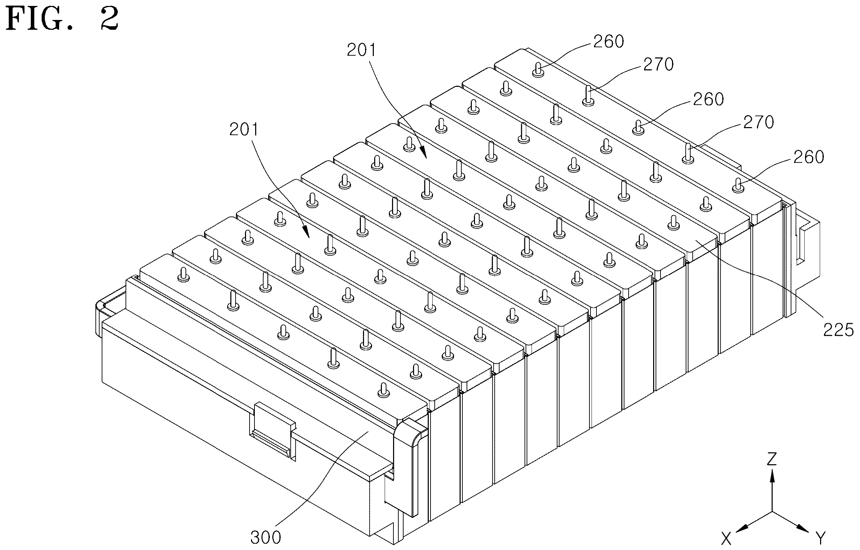

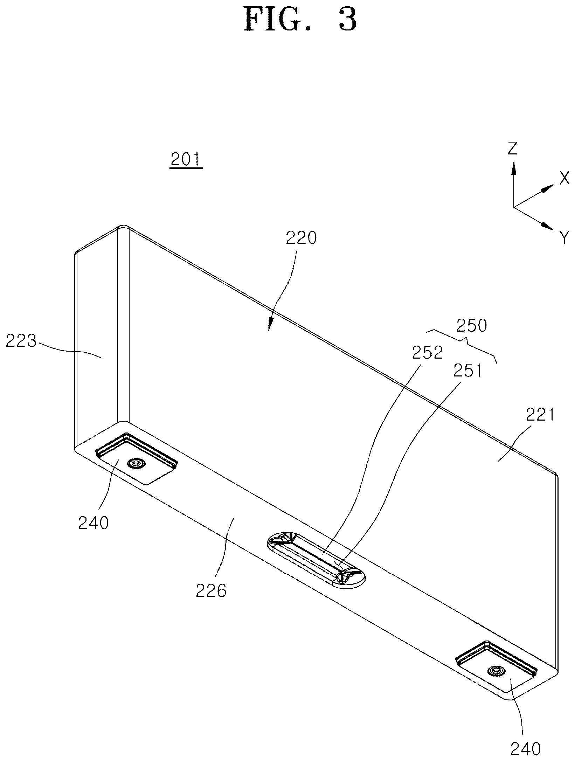

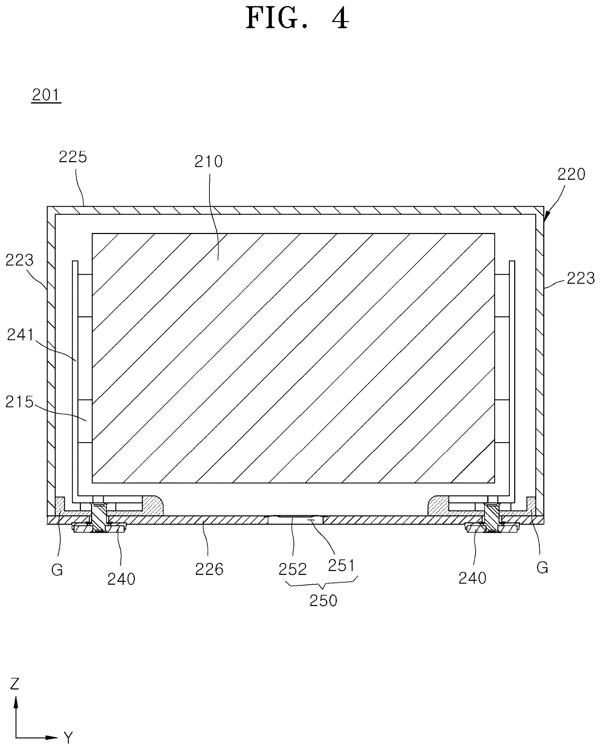

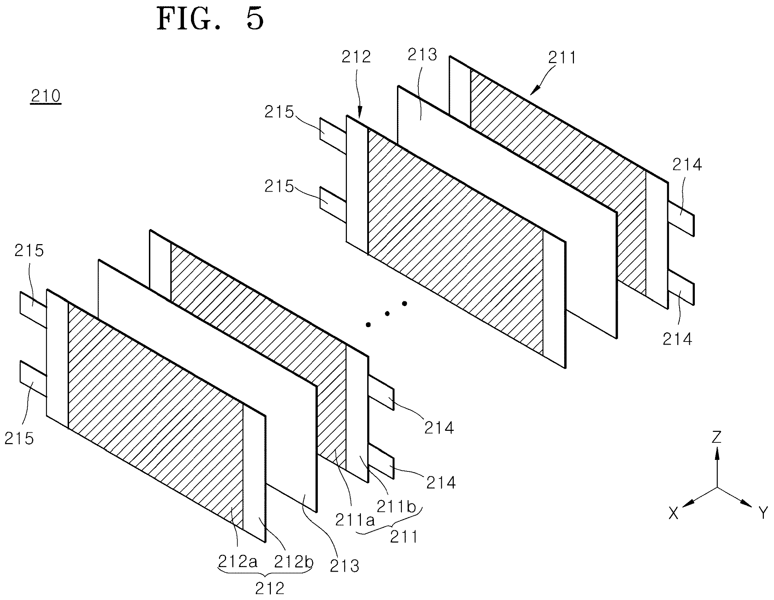

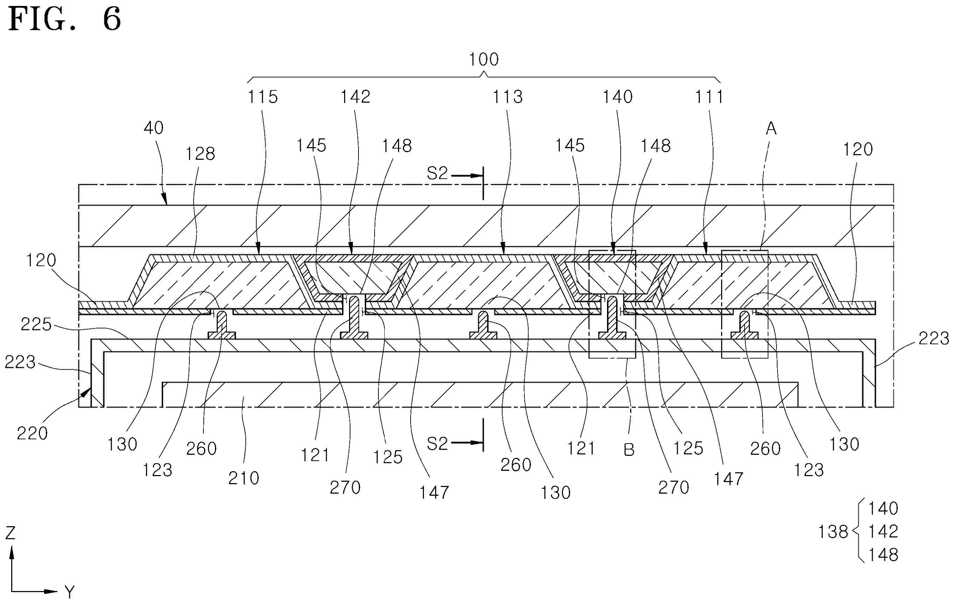

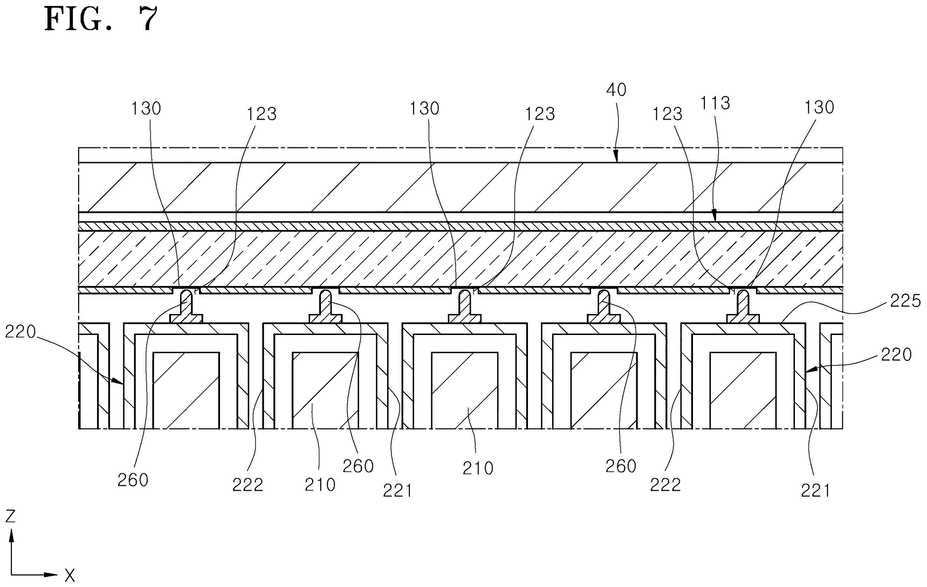

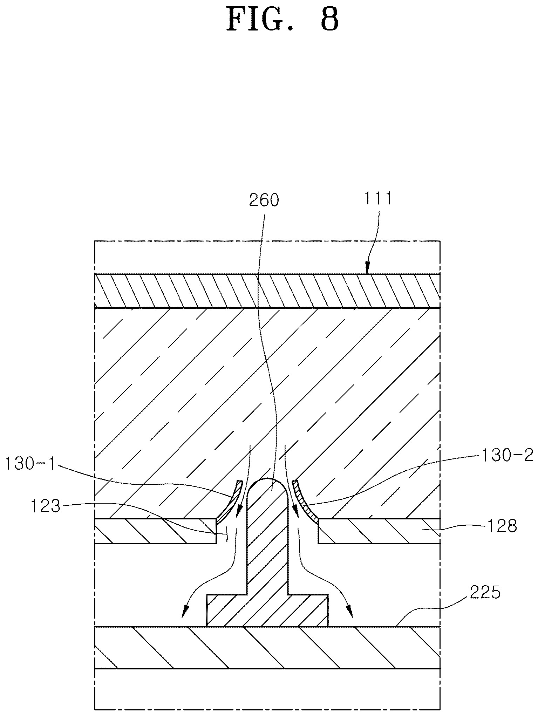

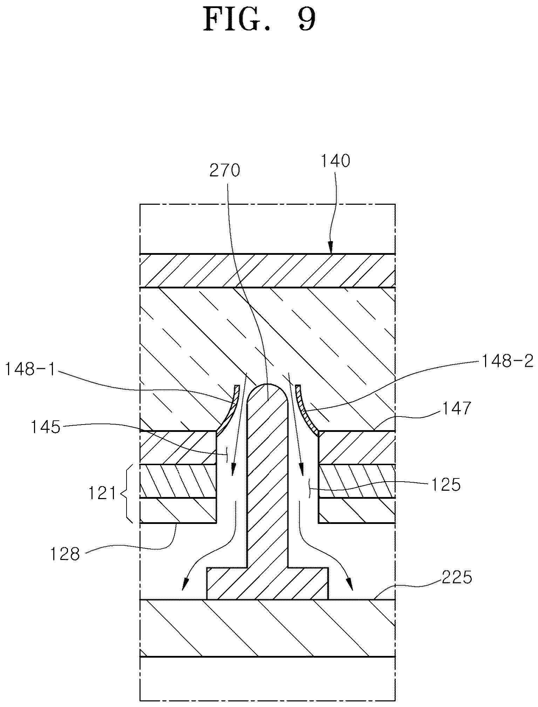

FIG. 1 is an exploded perspective view of a battery pack according to an embodiment of the present disclosure; FIG. 2 is an enlarged perspective view of a cell stack in FIG. 1; FIG. 3 is a perspective view of a battery cell included in the battery pack of FIG. 1; FIG. 4 is a longitudinal cross-sectional view of the battery cell of FIG. 3; FIG. 5 is an exploded perspective view of an electrode assembly in FIG. 4; FIG. 6 is a cross-sectional view of the battery pack in FIG. 1 taken along the line S1-S1; FIG. 7 is a cross-sectional view of the battery pack in FIG. 6 taken along the line S2-S2; FIG. 8 is an enlarged view of a region "A" in FIG. 6, and is a view showing a state in which a membrane ruptures; FIG. 9 is an enlarged view of a region "B" in FIG. 6, and is a view showing a state in which the membrane ruptures.

Referring to FIGS. 1 to 9, a battery pack 10A according to an embodiment of the present disclosure includes a pack housing 20, a battery cell 201, a cooling module 100, and a refrigerant trigger 260. The battery pack 10A may include a plurality of battery cells 201. For example, the plurality of battery cells 201 may constitute a cell stack 200 arranged in a row in a longitudinal direction of the pack housing 20, and a plurality of cell stacks 200 may be disposed in the pack housing 20.

Herein, a first direction may indicate a direction parallel to a longitudinal direction of the battery pack 10A and the cell stack 200, a second direction may indicate a direction parallel to a width direction of the battery pack 10A and the cell stack 200, and a third direction may indicate a direction parallel to a thickness direction of the battery pack 10A and the cell stack 200. The third direction may be the same direction as a direction of gravity. In FIGS. 1 to 7, the first direction may be a direction parallel to an X-axis, the second direction may be a direction parallel to a Y-axis, and the third direction may be a direction parallel to a Z-axis.

The pack housing 20 may include a base 21 and a cover 40 coupled to the base 21. The base 21 may include a bottom plate 22, and a first wall 23, a second wall 26, and a pair of third walls 31 protruding from an outer periphery of the bottom plate 22 toward the cover 40. An inner space of the pack housing 20 in which the plurality of cell stacks 200 are accommodated may be defined by the bottom plate 22, the first wall 23, the second wall 26, and the pair of third walls 31.

The pack housing 20 may further include a first inner frame 50 and a second inner frame 55 which divide the inner space of the pack housing 20 into a plurality of spaces. The first inner frame 50 may extend in the first direction. The second inner frame 55 may extend in the second direction and intersect the first inner frame 50. The plurality of cell stacks 200 may be accommodated one by one in the plurality of spaces divided by the first inner frame 50 and the second inner frame 55.

The cell stack 200 may include a plurality of battery cells 201 arranged in the first direction and a pair of end plates 300 in contact (e.g., close contact) with the cases 220 of a pair of battery cells 201 disposed at both, or opposite, ends in the first direction among the plurality of battery cells 201. The end plates 300 may support the plurality of battery cells 201 included in the cell stack 200.

The battery cell 201 includes a cell vent 250 on a first side. In an embodiment, the battery cell 201 may include a hexahedral-shaped case 220 and a pair of terminals 240 protruding from the case 220. The cell vent 250 may be installed in the case 220.

The case 220 may have a hexahedral-shaped exterior by a first surface 221 and a second surface 222 spaced apart from each other in the first direction (that is, the X-axis direction) and parallel to each other, a pair of third surfaces 223 spaced apart from each other in the second direction (that is, the Y-axis direction) and parallel to each other, and a fourth surface 225 and a fifth surface 226 spaced apart from each other in the third direction (that is, the Z-axis direction) and parallel to each other. The first surface 221 and the second surface 222 may be disposed in a row along the first direction, the pair of third surfaces 223 may be disposed in a row along the second direction, and the fourth surface 225 and the fifth surface 226 may be disposed in a row along the third direction.

The battery cell 201 may further include an electrode assembly 210.

The electrode assembly 210 may function as a unit structure which performs charging and discharging operations of power in the battery cell 201. The electrode assembly 210 may be accommodated in the case 220. The electrode assembly 210 may be accommodated in the inner space of the case 220.

The electrode assembly 210 may include a first electrode 211, a second electrode 212, and a separator 213.

Herein, an example in which the electrode assembly 210 is formed as a stack type in which a plurality of first electrodes 211, a plurality of second electrodes 212, and a plurality of separators 213 are alternately stacked along the first direction will be described. However, the electrode assembly 210 is not limited thereto, and may also be formed as a jelly roll type wound around a winding axis in a state in which the first electrodes 211, the second electrodes 212, and the separators 213 are sequentially stacked.

In an embodiment, the first electrode 211 may function as a positive electrode of the electrode assembly 210.

The first electrode 211 according to an embodiment may be formed to have a form of a foil including a metal material, such as aluminum or an aluminum alloy. Both, or opposite, surfaces of the first electrode 211 may be disposed perpendicular to the first direction. A type, size, shape or the like of the first electrode 211 is not specially limited as long as the first electrode 211 has conductivity and does not cause a chemical change in the secondary battery. The shape of the first electrode 211 may have any of various shapes in addition to a rectangular shape.

A plurality of first electrodes 211 may be provided. The plurality of first electrodes 211 may be arranged along the first direction. A number of first electrodes 211 may be varied depending on a charging capacity and the like of the battery cell 201.

The first electrode 211 may include a first active material layer 211a.

The first active material layer 211a may be provided in a form of being applied on at least a portion of the first electrode 211. The first active material layer 211a may be applied on both, or opposite, surfaces of the first electrode 211 or may be applied on only one surface of the first electrode 211.

In an embodiment, the first electrode 211 functions as a positive electrode, and the first active material layer 211a may include a positive electrode active material.

The positive electrode active material may be a compound capable of reversible intercalating and deintercalating of lithium (a lithiated intercalation compound). In an embodiment, one or more of composite oxides of lithium and a metal selected from cobalt, manganese, nickel, iron, and a combination thereof may be used.

In one example, the positive electrode active material may include at least one of a lithium-iron-phosphorus oxide (LiFePO₄, LFP), a lithium-manganese-iron-phosphorus oxide (LiMnFePO₄, LMFP), and a lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of the lithium-iron-phosphorus oxide (LiFePO₄, LFP), the lithium-manganese-iron-phosphorus oxide (LiMnFePO₄, LMFP), and the lithium-nickel-cobalt-manganese oxide (LiNiₓCo_{y}Mn_{z}O₂, NCM), and may include any two or all of the lithium-iron-phosphorus oxide (LiFePO₄, the LFP), lithium-manganese-iron-phosphorus oxide (LiMnFePO₄, LMFP), and the lithium-nickel-cobalt-manganese oxide (LiNiₓCo_{y}Mn_{z}O₂, NCM).

The first active material layer 211a may further include a positive electrode conductive material.

The positive electrode conductive material imparts conductivity to the first active material layer 211a, and any suitable material which does not cause a chemical change and is electrically conductive may be used. Examples of the positive electrode conductive material may include a carbon-based material, such as natural graphite, artificial graphite, carbon black, acetylene black, Ketjen black, carbon fibers, carbon nanofibers, carbon nanotubes, or the like, a metal-based material in the form of a metal powder or metal fiber containing copper, nickel, aluminum, silver, or the like a conductive polymer, such as a polyphenylene derivative, or a mixture thereof.

The first active material layer 211a may further include a positive electrode binder.

The positive electrode binder may attach particles constituting the positive electrode active material to each other well, and also attach the positive electrode active material to the first electrode 211 well.

An example of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the positive electrode binder, a cellulose-based compound may be further included to impart viscosity. The cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The first electrode 211 may include a first uncoated portion 211b on which the first active material layer 211a is not applied. The first uncoated portion 211b according to an embodiment may be disposed at an end region of the first electrode 211. However, the first uncoated portion 211b is not limited to this form and, in an embodiment, may be formed over an entire edge region of the first electrode 211.

The second electrode 212 may function as a negative electrode of the electrode assembly 210.

The second electrode 212 according to an embodiment may be formed to have a form of a foil including a metal material, such as copper, a copper alloy, nickel, or a nickel alloy. Both, or opposite, surfaces of the second electrode 212 may be disposed perpendicular to the first direction. A type, size, shape or the like of the second electrode 212 is not specifically limited as long as the second electrode 212 has conductivity and does not cause a chemical change in the secondary battery. A cross-sectional shape of the second electrode 212 may have any of various shapes in addition to the rectangular shape shown in FIG.5.

A plurality of second electrodes 212 may be provided. The plurality of second electrodes 212 may be arranged along the first direction. The plurality of first electrodes 211 and second electrodes 212 may be alternately disposed along the first direction.

The second electrode 212 may include a second active material layer 212a and a second uncoated portion 212b.

The second active material layer 212a may be provided in a form of being applied on at least a portion of the second electrode 212. The second active material layer 212a may be applied on both, or opposite, surfaces of the second electrode 212, or may be applied on only one surface of the second electrode 212.

In an embodiment, the second electrode 212 functions as a negative electrode, and the second active material layer 212a may include a negative electrode active material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite, such as amorphous, plate-like, flaky, spherical, or fibrous natural graphite or artificial graphite, and examples of the amorphous carbon may include soft carbon or hard carbon, mesophase pitch carbide, calcined coke, and the like.

In an embodiment, an alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

As the material capable of doping and dedoping lithium, a Si-based negative electrode active material or Sn-based negative electrode active material may be used. The Si-based negative electrode active material may include silicon, a silicon-carbon composite, SiOₓ (0<x≤2), a Si-Q alloy (where Q is selected from alkali metals, alkaline earth metals, group 13 elements, group 14 elements (excluding Si), group 15 elements, group 16 elements, transition metals, rare earth elements, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles of which surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles such that, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

The second active material layer 212a may further include a negative electrode conductive material and a negative electrode binder.

The negative electrode conductive material imparts conductivity to the second active material layer 212a, and any suitable material which does not cause a chemical change and is electrically conductive may be used. Examples of the negative electrode conductive material may include a carbon-based material, such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, silver, or the like, a conductive polymer, such as a polyphenylene derivative, or a mixture thereof.

The negative electrode binder may attach particles constituting the negative electrode active material to each other well, and also attach the negative electrode active material to the second electrode 212 well.

An example of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the negative electrode binder, a cellulose-based compound may be further included to impart viscosity. The cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The second electrode 212 may include the second uncoated portion 212b on which the second active material layer 212a is not applied. The second uncoated portion 212b according to an embodiment may be disposed at an end region of the second electrode 212. However, the second uncoated portion 212b is not limited to this form, and, in an embodiment, be formed over an entire edge region of the second electrode 212.

The separator 213 may be disposed between the first electrode 211 and the second electrode 212. The separator 213 may prevent or substantially prevent a short circuit between the first electrode 211 and the second electrode 212 while allowing lithium ions to move between the first electrode 211 and the second electrode 212. In an embodiment, the separator 213 may be disposed to completely cover a surface region of the electrode assembly 210. Accordingly, the separator 213 may prevent or substantially prevent the first electrode 211 and the second electrode 212 from being directly exposed to the outside of the electrode assembly 210.

As the separator 213, polyethylene, polypropylene, polyvinylidene fluoride, or a multilayer film of two or more layers thereof may be used, and a mixed multilayer separator such as a polyethylene/polypropylene two-layer separator, a polyethylene/polypropylene/polyethylene three-layer separator, a polyethylene/polyethylene/polypropylene three-layer separator, or the like may be used.

The separator 213 may include a porous substrate and a coating layer including an organic material, an inorganic material, or a combination thereof located on one surface or both surfaces of the porous substrate.

The porous substrate may be a polymer film formed of any one polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth) acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in a single coating layer or may be present in a form in which a coating layer including an organic material and a coating layer including an inorganic material are stacked.

The electrode assembly 210 according to an embodiment may further include a first tab 214 and a second tab 215.

The first tab 214 may be connected to the first electrode 211.

The first tab 214 according to an embodiment may have a form of a foil extending from the first uncoated portion 211b of the first electrode 211 in parallel to the second direction. The first tab 214 may have a generally rectangular shape. However, the shape of the first tab 214 is not limited thereto and may have any of various shapes.

In an embodiment, the first tab 214 may be formed integrally with the first electrode 211. For example, the first tab 214 may be a remaining region of the first uncoated portion 211b which remains after a partial region of the first uncoated portion 211b is cut or removed by notching processing or the like. In an embodiment, the first tab 214 may be manufactured separately from the first electrode 211 and then connected to the first uncoated portion 211b by welding or the like. In an embodiment, a material of the first tab 214 may be the same as a material of the first electrode 211.

A plurality of first tabs 214 may be provided. Each of the first tabs 214 may individually extend from the first uncoated portion 211b of a different first electrode 211. Neighboring first tabs 214 may be disposed to face each other along the first direction. That is, the plurality of first tabs 214 may be arranged along the first direction. The neighboring first tabs 214 may be disposed parallel to each other. The neighboring first tabs 214 may be in contact with each other and may also be spaced apart from each other by a thickness of the separator 213.

The plurality of first tabs 214 may be provided on each first electrode 211. For example, a pair of first tabs 214 may be formed on each first electrode 211. The pair of first tabs 214 formed on each first electrode 211 may be arranged along the third direction.

The second tab 215 may be connected to the second electrode 212.

The second tab 215 according to an embodiment may have a form of a foil extending from the second uncoated portion 212b of the second electrode 212 in parallel to the second direction. In an embodiment, extending directions of the first tab 214 and the second tab 215 may be opposite to each other. The second tab 215 may have a generally rectangular shape. However, a shape of the second tab 215 is not limited thereto and may have any of various shapes.

In an embodiment, the second tab 215 may be formed integrally with the second electrode 212. For example, the second tab 215 may be a remaining region of the second uncoated portion 212b which remains after a partial region of the second uncoated portion 212b is cut or removed by notching processing or the like. In an embodiment, the second tab 215 may be manufactured separately from the second electrode 212 and then connected to the second uncoated portion 212b by welding or the like. In an embodiment, a material of the second tab 215 may be the same as a material of the second electrode 212.

A plurality of second tabs 215 may be provided. Each of the second tabs 215 may individually extend from the second uncoated portion 212b of a different second electrode 212. Neighboring second tabs 215 may be disposed to face each other along the first direction. That is, the plurality of second tabs 215 may be arranged along the first direction. The neighboring second tabs 215 may be disposed parallel to each other. The neighboring second tabs 215 may be in contact with each other and may also be spaced apart from each other by the thickness of the separator 213.

The plurality of second tabs 215 may be provided on each second electrode 212. For example, a pair of second tabs 215 may be formed on each second electrode 212. The pair of second tabs 215 formed on each second electrode 212 may be arranged along the third direction.

The terminal 240 may protrude from the fifth surface 226 of the case 220. The terminal 240 may be electrically connected to the electrode assembly 210. The terminal 240 may pass through the fifth surface 226 of the case 220. However, a specific shape of the terminal 240 is not limited to the shape shown in FIGS. 3 and 4 and may have any of various shapes.

The terminal 240 may be formed of an electrically conductive material, such as aluminum, nickel, copper, or the like. A pair of terminals 240 may be provided. The pair of terminals 240 may be disposed spaced apart along the second direction on the fifth surface 226. The pair of terminals 240 may be individually connected to the first electrode 211 and the second electrode 212 of the electrode assembly 210. Accordingly, the pair of terminals 240 may function as a positive electrode terminal and a negative electrode terminal of the battery cell 201, respectively.

For example, a terminal 240 of the pair of terminals 240 may be connected to the first tab 214. In an embodiment, the terminal 240 of the pair of terminals 240 may be indirectly connected to the first tab 214 through a current collector 241 welded to the first tab 214. In an embodiment, the terminal 240 may be directly connected to the first tab 214.

Further, the other terminal 240 of the pair of terminals 240 may be connected to the second tab 215. In an embodiment, the other terminal 240 of the pair of terminals 240 may be indirectly connected to the second tab 215 through a current collector 241 welded to the second tab 215. In an embodiment, the other terminal 240 may be directly connected to the second tab 215.

An insulator G may be installed between the electrode assembly 210 and the fifth surface 226 of the case 220. A pair of insulators G may be provided. The pair of insulators G may be spaced apart from each other between the electrode assembly 210 and the fifth surface 226 along the second direction. The pair of insulators G may be disposed to individually surround different terminals 240. The insulator G may be formed of an insulating material, such as polyethylene (PE), polypropylene (PP), polyethylene terephthalate (PET), rubber, or the like.

The cell vent 250 may be disposed on the fifth surface 226 of the case 220 in which the pair of terminals 240 are installed. The cell vent 250 may open and close in response to an internal pressure of the case 220. The cell vent 250 may provide a discharge path for gas, flames, smoke, or the like generated in the case 220 if the internal pressure of the case 220 rises above a certain (e.g., a set) magnitude due to overcurrent, thermal runaway, or the like. The cell vent 250 may be disposed between the pair of terminals 240. A longitudinal direction of the cell vent 250 described below may refer to a direction parallel to the second direction, and a width direction of the cell vent 250 may refer to a direction parallel to the first direction.

The cell vent 250 may include a vent hole 251 and a vent plate 252.

The vent hole 251 may have a form of a hole passing through the fifth surface 226 of the case 220 along the third direction. For example, the vent hole 251 may be formed to pass through the fifth surface 226.

A cross-sectional shape of the vent hole 251 may have any of various shapes, such as any of an oval shape, a circular shape, a polygonal shape, and the like. In an embodiment, an area of the cell vent 250, a length of the cell vent 250, a width of the cell vent 250 described below may be the same as an area of the vent hole 251, a length of the vent hole 251, and a width of the vent hole 251.

The vent plate 252 may be installed on the fifth surface 226 of the case 220 to close the vent hole 251. The vent plate 252 may open and close in response to a change in internal pressure of an inner space of the case 220. That is, the vent plate 252 may maintain a closed state during normal operation of the battery cell 201 to seal the case 220.

The vent plate 252 may open as the internal pressure of the case 220 rises above a certain (e.g., a set) magnitude due to overcharging of the battery cell 201, the occurrence of a fire, or the like, and may discharge flames, gas, smoke, and the like generated inside the case 220 to the outside of the case 220.

The vent plate 252 according to an embodiment may have a form of a flat plate. In an embodiment, a thickness of the vent plate 252 may be smaller than a thickness of the metal plate corresponding to the fifth surface 226. The vent plate 252 may be coupled to the metal plate corresponding to the fifth surface 226 by any of various types of coupling methods, such as any of welding, bolting, fitting, and the like. In another embodiment of the present disclosure, the vent plate 252 may be inserted into the vent hole 251, and a peripheral surface of the vent plate 252 may be coupled to an inner side surface of the vent hole 251.

A cooling module 100 is disposed to face the battery cell 201. For example, the cooling module 100 is disposed to face the fourth surface 225 of the case 220, which is parallel to the fifth surface 226 of the case 220 in which the cell vent 250 is disposed.

The electrode assembly 210 is located between the fourth surface 225 and the fifth surface 226. The fifth surface 226 is disposed farther from the cooling module 100 than the fourth surface 225. A refrigerant is accommodated in the cooling module 100. The cooling module 100 may be disposed in the pack housing 20 to overlap the plurality of cell stacks 200 in the third direction.

The battery cells 201 may be disposed in the pack housing 20 such that the cell vent 250 faces the bottom plate 22 of the base 21. The cooling module 100 may be located between the battery cells 201 and the cover 40 in the pack housing 20.

The battery cells 201 may be disposed under the cooling module 100 such that the refrigerant flowing out of the cooling module 100 by the pressing of a refrigerant trigger 260 pours into the battery cells 201 by gravity.

The cooling module 100 may include refrigerant channels 111, 113, and 115 and a membrane 130. For example, the refrigerant channels may include first to third refrigerant channels 111, 113, and 115. A cooling module according to another embodiment of the present disclosure may include a single refrigerant channel, a pair of refrigerant channels, or a plurality of refrigerant channels of four or more instead of three refrigerant channels.

The first to third refrigerant channels 111, 113, and 115 may be located on an upper side of the cell stack 200 and may extend in the first direction. The first to third refrigerant channels 111, 113, and 115 may be disposed spaced apart from each other in the second direction.

The first to third refrigerant channels 111, 113, and 115 may form a flow path through which the refrigerant flows. For example, the first refrigerant channel 111 and the second refrigerant channel 113 may be connected to each other at an end in the first direction such that the refrigerant may flow, and the second refrigerant channel 113 and the third refrigerant channel 115 may be connected to each other at another end in the first direction such that the refrigerant may flow. For example, the refrigerant may be cooling water.

The cooling module 100 may further include a first refrigerant tube 133 connected to the first refrigerant channel 111 such that the refrigerant is supplied to the first refrigerant channel 111, and a second refrigerant tube 135 connected to the third refrigerant channel 115 such that the refrigerant absorbs heat from the cell stack 200 while subsequently passing through the first to third refrigerant channels 111, 113, and 115, and then is discharged to the outside of the third refrigerant channel 115.

For example, a first refrigerant tube groove 27 may be formed in the second wall 26 of the base 21 such that the first refrigerant tube 133 may pass therethrough, and a second refrigerant tube groove 24 may be formed in the first wall 23 of the base 21 such that the second refrigerant tube 135 may pass therethrough.

Unlike as described above, the refrigerant may be introduced into the cooling module 100 through the second refrigerant tube 135 and the refrigerant may be discharged from the cooling module 100 through the first refrigerant tube 133.

Each of the first to third refrigerant channels 111, 113, and 115 may include a through hole 123 through which the refrigerant trigger 260 passes. The through hole 123 may be formed in a surface of the cooling module 100 facing the battery cell 201.

The refrigerant channels 111, 113, and 115 may include metal plates 128 having excellent thermal conductivity. For example, a plurality of metal plates 128 made of an aluminum alloy or copper alloy may be press-processed and joined to manufacture the cooling module 100 including the refrigerant channels 111, 113, and 115.

The battery pack 10A may further include a facing cooling plate disposed between neighboring battery cells 201 to be in contact with the case 220 of the cell stack 200, or a cooling plate in contact with the fifth surface 226 of the case 220 to cool the battery cells 201.

The cooling module 100 may include a pair of connecting portions 121 formed by joining metal plates 128 which are in contact between the first refrigerant channel 111 and the second refrigerant channel 113, and also between the second refrigerant channel 113 and the third refrigerant channel 115. One of the pair of connecting portions 121 may connect the first refrigerant channel 111 and the second refrigerant channel 113 spaced apart along the second direction, and the other may connect the second refrigerant channel 113 and the third refrigerant channel 115 spaced apart along the second direction.

The cooling module 100 may further include a flange portion 120 formed by joining the metal plates 128 which are in contact with both, or opposite, ends in the second direction.

The membranes 130 may be attached to the first to third refrigerant channels 111, 113, and 115 while blocking the through holes 123. In an embodiment, a thickness of each membrane 130 may be thinner than a thickness of each of the metal plates 128 of the refrigerant channels 111, 113, and 115 such that the membrane 130 may be easily ruptured by the refrigerant trigger 260.

If a thermal runaway phenomenon occurs in one battery cell 201 among the plurality of battery cells 201 accommodated in the pack housing 20 and, thus, gas is discharged to the outside of the battery cell 201 through the cell vent 250 of the battery cell 201, the battery cell 201 may move toward the cooling module 100 due to a reaction force against the pressure of the gas discharged toward the bottom plate 22 through the battery cell 201 or a pressure imbalance in the pack housing 20 caused by the discharged gas.

The refrigerant trigger 260 is pushed by the battery cell 201 moving toward the cooling module 100 and presses the cooling module 100, and, accordingly, the refrigerant accommodated in the refrigerant channels 111, 113, and 115 may flow out of the cooling module 100.

The refrigerant trigger 260 may be located between the battery cell 201 and the cooling module 100. The refrigerant trigger 260 may include a pin fixed to the battery cell 201 and protruding toward the corresponding membrane 130. A plurality of refrigerant triggers 260 may be installed for each of the battery cells 201.

The cooling module 100 may include a number of membranes 130 corresponding one-to-one to all refrigerant triggers 260 installed in all battery cells 201 overlapping the cooling module 100 along the third direction, and a number of through holes 123 corresponding one-to-one to the membranes 130.

In an embodiment, for example, the refrigerant trigger 260 may be coupled to the fourth surface 225 of the case 220 facing the cooling module 100 by a method such as welding, bonding, or the like. In an embodiment, the refrigerant trigger 260 may be formed to protrude from the case 220. The refrigerant trigger 260 may extend in the third direction.

The membranes 130 corresponding to the refrigerant triggers 260 may be arranged along an imaginary straight line parallel to the third direction. In the embodiment shown in FIG. 6, an upper end of the refrigerant trigger 260 and the membrane 130 are spaced apart from each other, but in another embodiment of the present disclosure, the upper end of the refrigerant trigger may also be in contact with the membrane even if thermal runaway does not occur.

When the battery cell 201 moves toward the cooling module 100 in the pack housing 20, the refrigerant trigger 260 moves in the same direction as the movement direction of the battery cell 201, and, as shown in FIG. 8, the corresponding membrane 130 may be pressed by the refrigerant trigger 260 and ruptured into a plurality of pieces 130-1 and 130-2. The plurality of ruptured pieces 130-1 and 130-2 may not be completely separated from each other, but may be connected.

Accordingly, the refrigerant accommodated in the refrigerant channels 111, 113, and 115 may flow out in the direction of gravity and pour into the battery cell 201. Accordingly, a fire in the battery pack 10A may be extinguished early, the spread of the fire may be delayed, and the fire may not spread into a large fire.

In another embodiment of the present disclosure, when the battery cell 201 moves toward the cooling module 100 in the pack housing 20 and the refrigerant trigger 260 moves in a same direction as the movement direction of the battery cell 201, the membranes 130 may be separated from the refrigerant channels 111, 113, and 115 instead of being pressed and ruptured by the refrigerant triggers 260. In further detail, the membranes 130 may be separated from the refrigerant channels 111, 113, and 115 while joint portions between the refrigerant channels 111, 113, and 115 and the membranes 130 rupture. In this case, the through holes 123 may open and the refrigerant accommodated in the refrigerant channels 111, 113, and 115 may pour into the battery cell 201.

In the battery pack 10A according to an embodiment of the present disclosure, the refrigerant trigger 260 may be fixed to the fourth surface 225 facing the cooling module 100 among the six surfaces 221, 222, 223, 225, and 226 of the case 220 of the battery cell 201. The cell vent 250 and the pair of terminals 240 of the battery cell 201 may be disposed on the fifth surface 226 spaced apart from the fourth surface 225 in the third direction among the six surfaces 221, 222, 223, 225, and 226 of the case 220 of the battery cell 201.

The electrode assembly 210 is located between the fourth surface 225 and the fifth surface 226. The fifth surface 226 is disposed farther from the cooling module 100 than the fourth surface 225. The fifth surface 226 may be disposed spaced apart from the fourth surface 225 in a negative (-) Z-axis direction.

Referring to the example shown in FIG. 1, the refrigerant triggers 260 arranged in a first column along the first direction may be arranged in three rows along the second direction. However, in another embodiment of the present disclosure, the plurality of refrigerant triggers 260 may be arranged in different forms.

The battery pack 10A may further include a fire extinguishing agent supply unit, or fire extinguishing agent supplier, 138 and a fire extinguishing agent trigger 270. A fire extinguishing agent may be accommodated in the fire extinguishing agent supply unit 138. In the case of the battery pack 10A according to an embodiment of the present disclosure, the cooling module 100 includes the fire extinguishing agent supply unit 138. However, a battery pack according to another embodiment of the present disclosure may also include a cooling module separated from the cooling module.

The fire extinguishing agent supply unit 138 may include fire extinguishing agent channels 140 and 142, and a membrane 148. For example, the fire extinguishing agent channels may include first and second fire extinguishing agent channels 140 and 142. The first and second fire extinguishing agent channels 140 and 142 are located on the upper side of the cell stack 200 and may extend in the first direction. The first and second fire extinguishing agent channels 140 and 142 may be disposed spaced apart from each other in the second direction.

In a normal state in which thermal runaway does not occur, the cooling module 100 performs a function of cooling the cell stack 200. Accordingly, the battery pack 10A according to an embodiment of the present disclosure does not require a separate means for extinguishing a fire in the battery pack 10A and a space for installing the same, and a cost of the battery pack 10A may be reduced and energy density may be enhanced.

In the cooling module 100, the plurality of fire extinguishing agent channels 140 and 142 and the plurality of refrigerant channels 111, 113, and 115 may be alternately arranged in the second direction. In this way, the fire extinguishing agent supply unit 138 is included in the cooling module 100 such that the space occupied by the cooling module 100 is not expanded, and the energy density of the battery pack 10A may be further enhanced.

The first and second fire extinguishing agent channels 140 and 142 may form a flow path through which the fire extinguishing agent flows. The fire extinguishing agent may include, for example, any of nitrogen gas, an inert gas, a halogen compound, such as a halon fire extinguishing agent, and an evaporative liquid fire extinguishing agent, such as carbon tetrachloride (CCl₄).

The cooling module 100 may further include a pair of fire extinguishing agent supply tubes 149 connected to the first fire extinguishing agent channel 140 and the second fire extinguishing agent channel 142 such that the fire extinguishing agent is supplied to the first fire extinguishing agent channel 140 and the second fire extinguishing agent channel 142.

For example, fire extinguishing agent supply tube through grooves 25 and 28 may be formed in the first wall 23 and the second wall 26 of the base 21 such that the fire extinguishing agent supply tubes 149 pass therethrough.

If the fire extinguishing agent starts to flow out of the fire extinguishing agent channels 140 and 142 by the fire extinguishing agent triggers 270, the fire extinguishing agent may be input into the fire extinguishing agent channels 140 and 142 through the fire extinguishing agent supply tubes 149 until the supply of fire extinguishing agent is stopped by the opening/closing control of a valve (not shown). The fire extinguishing agent may continuously circulate in the first fire extinguishing agent channel 140 and the second fire extinguishing agent channel 142 and may not flow.

The first and second fire extinguishing agent channels 140 and 142 may include through holes 145 through which the fire extinguishing agent triggers 270 pass. The through holes 145 may be formed in surfaces of the first and second fire extinguishing agent channels 140 and 142, which face the battery cell 201.

The connecting portion 121 of the cooling module 100 may include connecting portion through holes 125 disposed in a straight line with the through holes 145 of the fire extinguishing agent channels 140 and 142 along the third direction such that the fire extinguishing agent triggers 270 may pass therethrough.

The fire extinguishing agent channels 140 and 142 may include metal plates 147 formed of a material having excellent thermal conductivity, for example, such as an aluminum alloy or copper alloy.

The membranes 148 may be attached to the first and second fire extinguishing agent channels 140 and 142 while blocking the through holes 145 of the first and second fire extinguishing agent channels 140 and 142. In an embodiment, a thickness of the membrane 148 may be thinner than a thickness of each of the metal plates 147 of the fire extinguishing agent channels 140 and 142 such that the membrane 148 may be easily ruptured by the fire extinguishing agent trigger 270.

If a thermal runaway phenomenon occurs in one battery cell 201 among the plurality of battery cells 201 accommodated in the pack housing 20 and, thus, gas is discharged to the outside of the battery cell 201 through the cell vent 250 of the battery cell 201, the battery cell 201 may move toward the cooling module 100 due to a reaction force against the pressure of the gas discharged toward the bottom plate 22 through the battery cell 201 or a pressure imbalance in the pack housing 20 caused by the discharged gas.

The fire extinguishing agent trigger 270 is pushed by the battery cell 201 moving toward the cooling module 100 and presses the fire extinguishing agent supply unit, and, accordingly, the fire extinguishing agent accommodated in the fire extinguishing agent channels 140 and 142 may flow out of the cooling module 100. The fire extinguishing agent trigger 270 may pass through the connecting portion through hole 125 and press the membrane 148.

The fire extinguishing agent trigger 270 may be located between the battery cell 201 and the cooling module 100. In an embodiment, the fire extinguishing agent trigger 270 may include a pin fixed to the battery cell 201 and protruding toward the corresponding membrane 148. A plurality of fire extinguishing agent triggers 270 may be installed for each of the battery cells 201.

In an embodiment, the fire extinguishing agent supply unit may include a number of membranes 148 corresponding one-to-one to the fire extinguishing agent triggers 270 installed in all battery cells 201 overlapping the cooling module 100 along the third direction, and a number of through holes 145 corresponding one-to-one to all membranes 148.

In an embodiment, for example, the fire extinguishing agent trigger 270 may be coupled to the fourth surface 225 of the case 220 facing the cooling module 100 by a method such as welding, bonding, or the like. In an embodiment, the fire extinguishing agent trigger 270 may be formed to protrude from the case 220. The fire extinguishing agent trigger 270 may extend in the third direction.

In an embodiment, the membranes 148 corresponding to the fire extinguishing agent triggers 270 may be arranged along an imaginary straight line parallel to the third direction. In the embodiment shown in FIG. 6, an upper end of the fire extinguishing agent trigger 270 and the membrane 148 are spaced apart from each other, but in another embodiment of the present disclosure, the upper end of the fire extinguishing agent trigger may be in contact with the membrane even when thermal runaway does not occur.

When the battery cell 201 moves toward the cooling module 100 in the pack housing 20, the fire extinguishing agent trigger 270 moves in the same direction as the movement direction of the battery cell 201, and, as shown in FIG. 9, the corresponding membrane 148 may be pressed by the fire extinguishing agent trigger 270 and ruptured into a plurality of pieces 148-1 and 148-2.

Accordingly, the fire extinguishing agent accommodated in the fire extinguishing agent channels 140 and 142 may flow out in the direction of gravity and pour into the battery cell 201. Since the fire extinguishing agent also flows out of the cooling module 100 and pours into the battery cell 201 in addition to the refrigerant, the fire in the battery pack 10A may be extinguished more quickly and the spread of the fire may be further delayed.

In another embodiment of the present disclosure, when the battery cell 201 moves toward the cooling module 100 in the pack housing 20 and the fire extinguishing agent trigger 270 moves in the same direction as the movement direction of the battery cell 201, the membranes 148 may be separated from the fire extinguishing agent channels 140 and 142 instead of being pressed and ruptured by the fire extinguishing agent triggers 270. In an embodiment, the membranes 148 may be separated from the fire extinguishing agent channels 140 and 142 while joint portions between the fire extinguishing agent channels 140 and 142 and the membranes 148 rupture. In this case, the through holes 145 may open and the fire extinguishing agent accommodated in the fire extinguishing agent channels 140 and 142 may pour into the battery cell 201.

In the battery pack 10A according to an embodiment of the present disclosure, the fire extinguishing agent trigger 270 may be fixed to the fourth surface 225 facing the cooling module 100 among the six surfaces 221, 222, 223, 225, and 226 of the case 220, like the refrigerant trigger 260.

Referring to the example shown in FIG. 1, the fire extinguishing agent triggers 270 arranged in a first column along the first direction may be arranged in two rows along the second direction. The refrigerant triggers 260 and the fire extinguishing agent triggers 270 may be alternately arranged along the second direction.

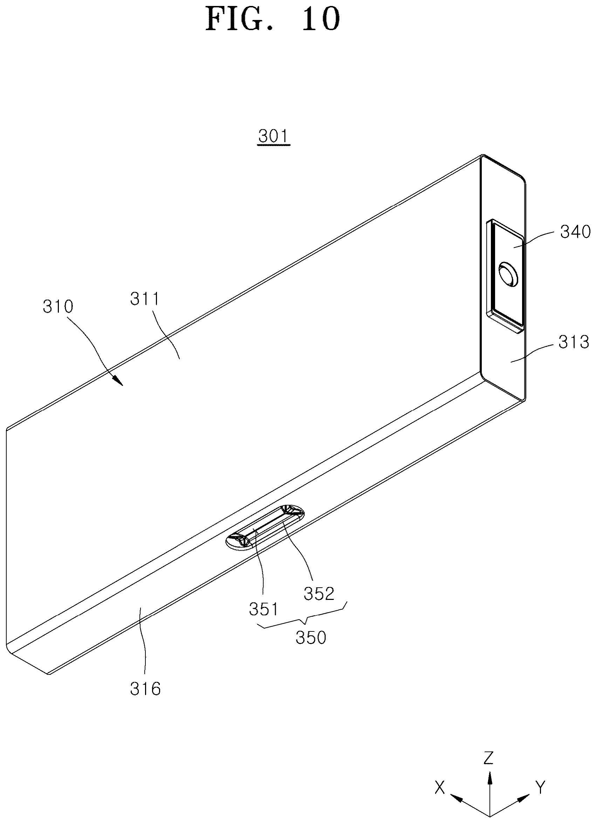

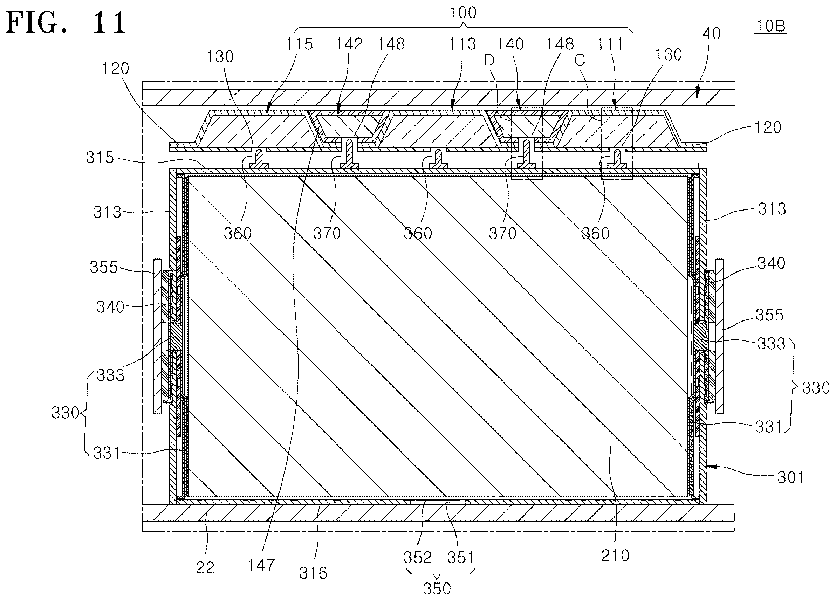

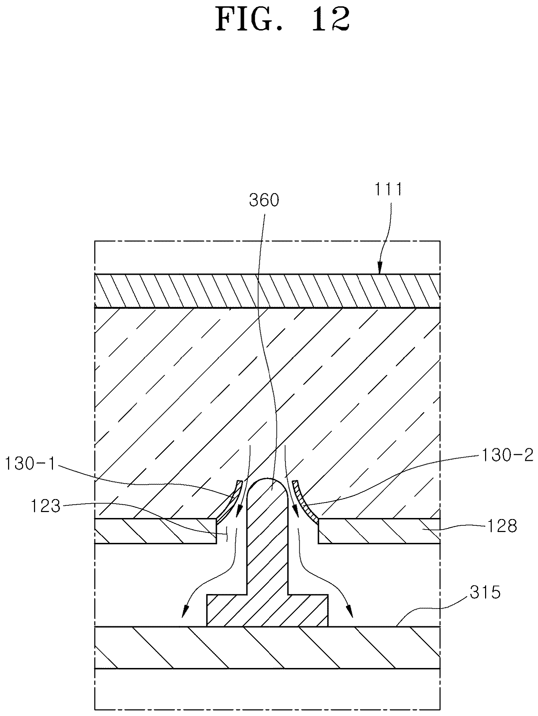

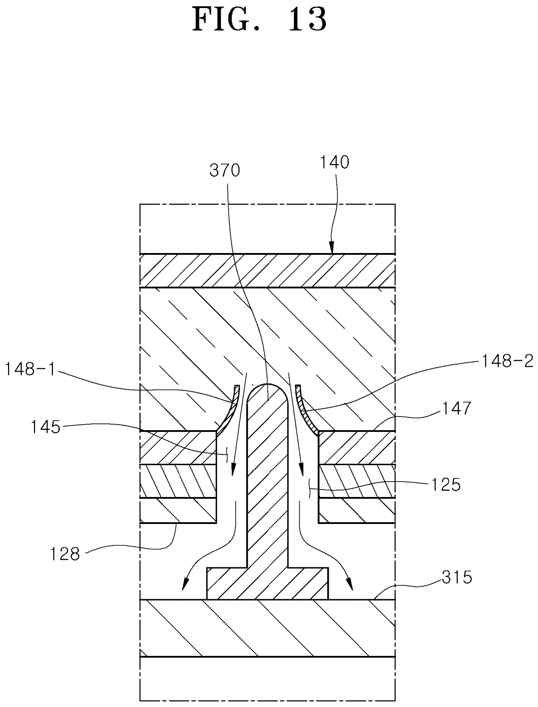

FIG. 10 is a perspective view of a battery cell included in a battery pack according to another embodiment of the present disclosure; FIG. 11 is a longitudinal cross-sectional view of the battery pack of FIG. 10; FIG. 12 is an enlarged view of a region "C" in FIG. 11, and is a view showing a state in which a membrane ruptures; and FIG. 13 is an enlarged view of a region "D" in FIG. 11, and is a view showing the state in which the membrane ruptures.

Referring to FIGS. 1 and 10 to 13, a battery pack 10B according to another embodiment of the present disclosure may include a pack housing 20, a plurality of battery cells 301, a cooling module 100, a plurality of refrigerant triggers 360, and a plurality of fire extinguishing agent triggers 370.

The pack housing 20 and the cooling module 100 may be the same as the pack housing 20 and the cooling module 100 included in the battery pack 10A according to the previously described embodiment of the present disclosure, and overlapping descriptions may be omitted.

A battery cell 301 may include a case 310, an electrode assembly 210, a pair of terminals 340, a pair of current collector members 330, and a cell vent 350 installed in the case 310.

In an embodiment, the case 310 may have a hexahedral-shaped exterior by a first surface 311 and a second surface (not shown) spaced apart in the first direction (for example, the X-axis direction) and disposed in parallel, a pair of third surfaces 313 spaced apart in the second direction (for example, the Y-axis direction) and disposed in parallel, and a fourth surface 315 and a fifth surface 316 spaced apart in the third direction (for example, the Z-axis direction) and disposed in parallel.

The pair of terminals 340 respectively protrude from the pair of third surfaces 313 of the case 310 in the second direction. Each of the terminals 340 may be installed in the case 310 to pass through the respective third surface 313.

The current collector member 330 may include a subplate portion 331 and a current collector portion 333. The first tab 214 (see FIG. 5) of the electrode assembly 210 may be electrically connected to the subplate portion 331 of one of the current collector members 330, and the current collector portion 333 may be electrically connected to one terminal 340.

The second tab 215 of the electrode assembly 210 (see FIG. 5) may be electrically connected to the subplate portion 331 of the other current collector member 330, and the current collector portion 333 may be electrically connected to the other terminal 340.

The cell vent 350 may be disposed on the fifth surface 316 of the case 310. The cell vent 350 may open and close in response to an internal pressure of the case 310. The cell vent 350 may provide a discharge path for gas, flames, smoke, or the like generated in the case 310 if the internal pressure of the case 310 rises above a certain (e.g., a set) magnitude due to overcurrent, thermal runaway, or the like. In an embodiment, the cell vent 350 may be disposed between the pair of terminals 340. A longitudinal direction of the cell vent 350 described below may refer to a direction parallel to the second direction, and a width direction of the cell vent 350 may refer to a direction parallel to the first direction.

The cell vent 350 may include a vent hole 351 and a vent plate 352.

The vent hole 351 may have a form of a hole passing through the fifth surface 316 of the case 310 along the third direction. For example, the vent hole 351 may be formed to pass through the fifth surface 316 of the case 310.

The vent plate 352 may be installed on a metal plate corresponding to the fifth surface 316 of the case 310 to close the vent hole 351. The vent plate 352 may open and close in response to a change in pressure of an inner space of the case 310. That is, the vent plate 352 may maintain a closed state during normal operation of the battery cell 301 to seal the case 310.

The vent plate 352 may open as the internal pressure of the case 310 rises above a certain (e.g., a set) magnitude due to overcharging of the battery cell 301, the occurrence of a fire, or the like, and may discharge flames, gas, smoke, and the like generated inside the case 310 to the outside of the case 310.

The vent plate 352 according an embodiment may have a form of a flat plate. In an embodiment, a thickness of the vent plate 352 may be smaller than a thickness of the metal plate corresponding to the fifth surface 316 of the case 310. The vent plate 352 may be coupled to the metal plate corresponding to the fifth surface 316 by any of various types of coupling methods, such as any of welding, bolting, fitting, and the like. In an embodiment of the present disclosure, the vent plate 352 may be inserted into the vent hole 351, and a peripheral surface of the vent plate 352 may be coupled to an inner side surface of the vent hole 351.

The cooling module 100 is disposed to face the fourth surface 315 of the case 310 opposite the fifth surface 316 of the case 310 in which the cell vent 350 is disposed. The cooling module 100 may be located between the battery cells 301 and a cover 40 in the pack housing 20. The battery cells 301 may be disposed in the pack housing 20 such that the cell vent 350 faces a bottom plate 22 of a base 21.

The battery pack 10B may further include a bus bar 355 which electrically connects a plurality of battery cells 301. A plurality of bus bars 355 may be provided. Each of the bus bars 355 may connect a pair of neighboring battery cells 301 in series or parallel. The bus bar 355 may be joined to the terminal 340, for example, by welding.

A refrigerant trigger 360 is pushed by the battery cell 301 moving toward the cooling module 100 and presses the cooling module 100, and, accordingly, the refrigerant accommodated in refrigerant channels 111, 113, and 115 may flow out of the cooling module 100.

The refrigerant trigger 360 may be located between the battery cells 301 and the cooling module 100. In an embodiment, the refrigerant trigger 360 may include a pin fixed to the battery cells 301 and protruding toward the corresponding membrane 130. A plurality of refrigerant triggers 360 may be installed for each of the battery cells 301.

The cooling module 100 may include a number of membranes 130 corresponding one-to-one to the refrigerant triggers 360 installed in all battery cells 301 overlapping the cooling module 100 along the third direction, and a number of through holes 123 corresponding one-to-one to the membranes 130.

In an embodiment, for example, the refrigerant trigger 360 may be coupled to the fourth surface 315 of the case 310 facing the cooling module 100 by a method such as welding, bonding, or the like. In an embodiment, the refrigerant trigger 360 may be formed to protrude from the case 310. The refrigerant trigger 360 may extend in the third direction.

The membranes 130 corresponding to the refrigerant triggers 360 may be arranged along an imaginary straight line parallel to the third direction. In the embodiment shown in FIG. 11, an upper end of the refrigerant trigger 360 and the membrane 130 are spaced apart from each other, but in another embodiment of the present disclosure, the upper end of the refrigerant trigger may also be in contact with the membrane even when thermal runaway does not occur.

When the battery cell 301 moves toward the cooling module 100 in the pack housing 20, the refrigerant trigger 360 moves in the same direction as the movement direction of the battery cell 301, and as shown in FIG. 12, the corresponding membrane 130 may be pressed by the refrigerant trigger 360 and ruptured into a plurality of pieces 130-1 and 130-2.

Accordingly, the refrigerant accommodated in the refrigerant channels 111, 113, and 115 may flow out in the direction of gravity and pour into the battery cell 301. Accordingly, a fire in the battery pack 10B may be extinguished early, the spread of the fire may be delayed, and the fire may not spread into a large fire.

In another embodiment of the present disclosure, when the battery cell 301 moves toward the cooling module 100 in the pack housing 20 and the refrigerant trigger 360 moves in a same direction as the movement direction of the battery cell 301, the membranes 130 may be separated from the refrigerant channels 111, 113, and 115 instead of being pressed and ruptured by the refrigerant triggers 360. In further detail, the membranes 130 may be separated from the refrigerant channels 111, 113, and 115 while joint portions between the refrigerant channels 111, 113, and 115 and the membranes 130 rupture. In this case, through holes 123 may open and the refrigerant accommodated in the refrigerant channels 111, 113, and 115 may pour into the battery cell 301.

If a thermal runaway phenomenon occurs in one battery cell 301 among the plurality of battery cells 301 accommodated in the pack housing 20 and, thus, gas is discharged to the outside of the battery cell 301 through the cell vent 350 of the battery cell 301, the battery cell 301 may move toward the cooling module 100 due to a reaction force against a pressure of the gas discharged toward the bottom plate 22 through the battery cell 301 or a pressure imbalance in the pack housing 20 caused by the discharged gas.

A fire extinguishing agent trigger 370 is pushed by the battery cell 301 moving toward the cooling module 100 and presses a fire extinguishing agent supply unit, and, accordingly, the fire extinguishing agent accommodated in fire extinguishing agent channels 140 and 142 may flow out of the cooling module 100. The fire extinguishing agent trigger 370 may press a membrane 148 through a connecting portion through hole 125.

The fire extinguishing agent trigger 370 may be located between the battery cell 301 and the cooling module 100. In an embodiment, the fire extinguishing agent trigger 370 may include a pin fixed to the battery cell 301 and protruding toward the corresponding membrane 148. A plurality of fire extinguishing agent triggers 370 may be installed for each of the battery cells 301.

In an embodiment, the fire extinguishing agent supply unit may include a number of membranes 148 corresponding one-to-one to all fire extinguishing agent triggers 370 installed in all battery cells 301 overlapping the cooling module 100 along the third direction, and a number of through holes 145 corresponding one-to-one to all membranes 148.

In an embodiment, for example, the fire extinguishing agent trigger 370 may be joined to the fourth surface 315 of the case 310 facing the cooling module 100 by a method such as welding, bonding, or the like. In an embodiment, the fire extinguishing agent trigger 370 may be formed to protrude from the case 310. The fire extinguishing agent trigger 370 may extend in the third direction.

The membranes 148 corresponding to the fire extinguishing agent triggers 370 may be arranged along an imaginary straight line parallel to the third direction. In the embodiment shown in FIG. 11, an upper end of fire extinguishing agent trigger 370 and the membrane 148 are spaced apart from each other, but, in another embodiment of the present disclosure, the upper end of the fire extinguishing agent trigger may also be in contact with the membrane even if thermal runaway does not occur.

If the battery cell 301 moves toward the cooling module 100 in the pack housing 20, the fire extinguishing agent trigger 370 moves in the same direction as the movement direction of the battery cell 301, and as shown in FIG. 13, the corresponding membrane 148 may be pressed by the fire extinguishing agent trigger 370 and ruptured into a plurality of pieces 148-1 and 148-2.

Accordingly, the fire extinguishing agent accommodated in the fire extinguishing agent channels 140 and 142 may flow out in the direction of gravity and pour into the battery cell 301. In an embodiment, the fire extinguishing agent also flows out of the cooling module 100 and pours into the battery cell 301 in addition to the refrigerant, and the fire in the battery pack 10B may be extinguished more quickly and the spread of the fire may be further delayed.

In another embodiment of the present disclosure, if the battery cell 301 moves toward the cooling module 100 in the pack housing 20 and the fire extinguishing agent trigger 370 moves in the same direction as the movement direction of the battery cell 301, the membranes 148 may be separated from the fire extinguishing agent channels 140 and 142 instead of being pressed and ruptured by the fire extinguishing agent triggers 370. In further detail, the membranes 148 may be separated from the fire extinguishing agent channels 140 and 142 while joint portions between the fire extinguishing agent channels 140 and 142 and the membranes 148 rupture. In this case, through holes 145 may open and the fire extinguishing agent accommodated in the fire extinguishing agent channels 140 and 142 may pour into the battery cell 301.

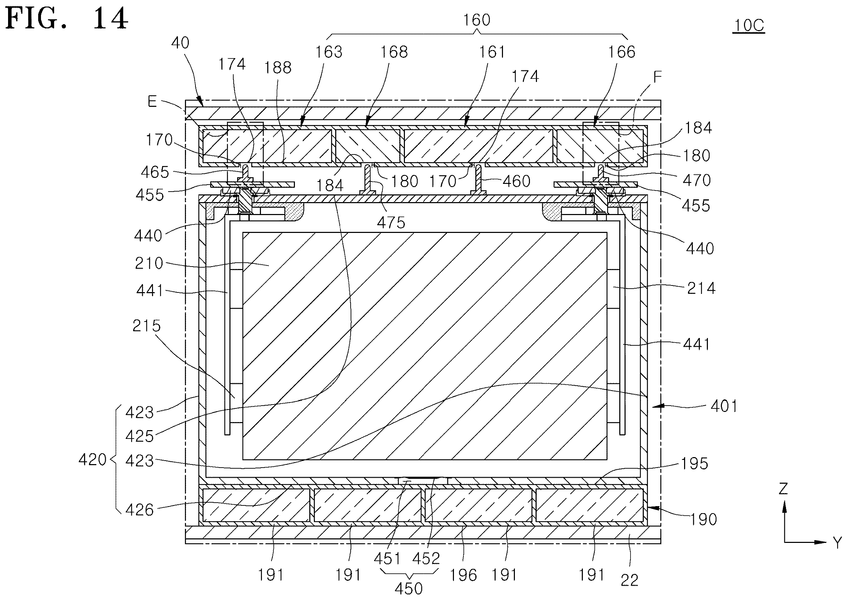

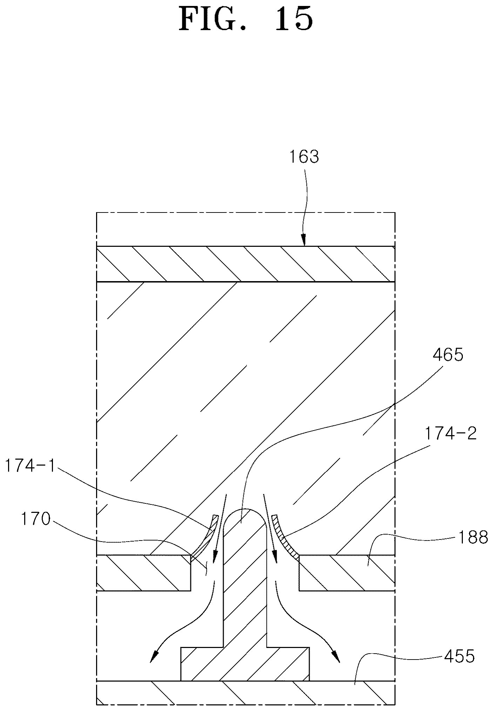

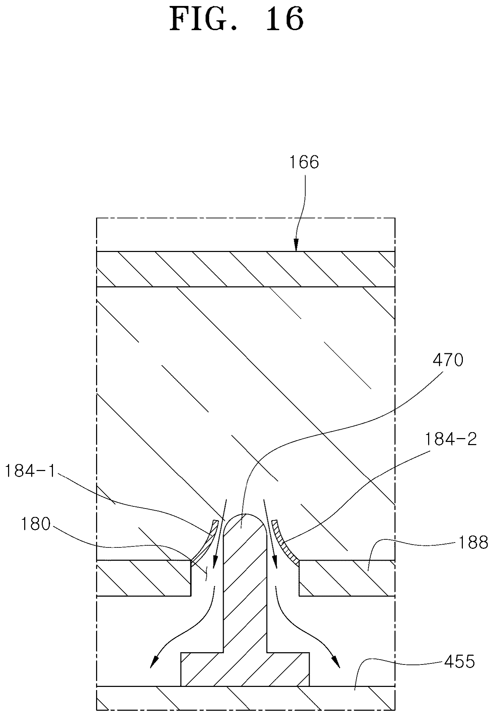

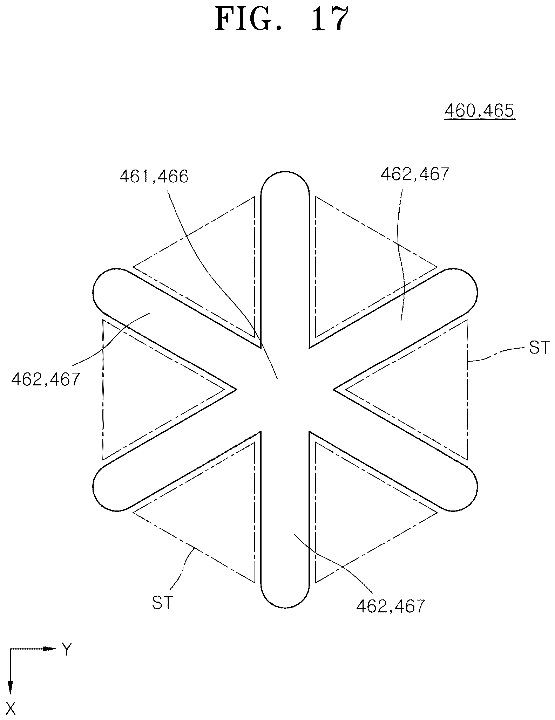

FIG. 14 is a longitudinal cross-sectional view of a battery pack according to another embodiment of the present disclosure; FIG. 15 is an enlarged view of a region "E" in FIG. 14, and is a view showing a state in which a membrane ruptures; FIG. 16 is an enlarged view of a region "F" in FIG. 14, and is a view showing a state in which the membrane ruptures; and FIG. 17 is a cross-sectional view of a refrigerant trigger in FIG. 14.

Referring to FIGS. 1 and 14 to 17, a battery pack 10C according to the present embodiment of the present disclosure may include a pack housing 20, a plurality of battery cells 401, a cooling module 160, a cooling plate 190, a plurality of refrigerant triggers 460 and 465, and a plurality of fire extinguishing agent triggers 470 and 475. The pack housing 20 may be the same as the pack housing 20 included in the battery pack 10A previously described, and overlapping descriptions may be omitted.

In an embodiment, the battery cell 401 may include a hexahedral-shaped case 420, a pair of terminals 440 protruding from the case 420, and a cell vent 450 installed in the case 420.

The case 420 may have a hexahedral-shaped exterior by a first surface (not shown) and a second surface (not shown) spaced apart in the first direction and disposed in parallel, a pair of third surfaces 423 spaced apart in the second direction and disposed in parallel, and a fourth surface 425 and a fifth surface 426 spaced apart in the third direction and disposed in parallel.

The battery cell 401 may further include an electrode assembly 210 accommodated in the case 420. The electrode assembly 210 may be the same as the electrode assembly 210 included in the battery cell 201 according to the previously described embodiment of the present disclosure, and overlapping descriptions may be be omitted.

The terminal 440 may protrude from the fourth surface 425 of the case 420. The fourth surface 425 may be a surface facing the cooling module 160 among six surfaces of the case 420.

The terminal 440 may pass through the fourth surface 425 of the case 420. However, a specific shape of the terminal 440 is not limited to the shape shown in FIG. 14 and may be any of various shapes.

The terminal 440 may be electrically connected to the electrode assembly 210. The terminal 440 may be formed of an electrically conductive material, such as aluminum, nickel, copper, or the like. A pair of terminals 440 may be provided. The pair of terminals 440 may be disposed spaced apart from each other along the second direction on the fourth surface 425. The pair of terminals 440 may be individually connected to a first electrode 211 and a second electrode 212 of the electrode assembly 210. Accordingly, the pair of terminals 440 may function as a positive electrode terminal and a negative electrode terminal of the battery cell 401, respectively.

For example, one terminal 440 of the pair of terminals 440 may be connected to a first tab 214. In an embodiment, one terminal 440 of the pair of terminals 440 may be indirectly connected to the first tab 214 through a current collector 441 welded to the first tab 214. In an embodiment, one terminal 440 may be directly connected to the first tab 214.

Further, the other terminal 440 of the pair of terminals 440 may be connected to a second tab 215. In an embodiment, the other terminal 440 of the pair of terminals 440 may be indirectly connected to the second tab 215 through a current collector 441 welded to the second tab 215. In an embodiment, the other terminal 440 may be directly connected to the second tab 215.

The cell vent 450 may include a vent hole 451 and a vent plate 452.

The vent hole 451 may be formed to have the form of a hole passing through the fifth surface 426 of the case 420 along the third direction. For example, the vent hole 451 may be formed to pass through a metal plate corresponding to the fifth surface 426 of the case 420.

The vent plate 452 may be installed on the metal plate corresponding to the fifth surface 426 of the case 420 to close the vent hole 451. The vent plate 452 may open and close in response to a change in internal pressure of an inner space of the case 420. That is, the vent plate 452 may maintain a closed state during normal operation of the battery cell 401 to seal the case 420.

The vent plate 452 may open as the internal pressure of the case 420 rises above a certain (e.g., a set magnitude) due to overcharging of the battery cell 401, the occurrence of a fire, or the like, and may discharge flames, gas, smoke, and the like generated inside the case 420 to the outside of the case 420.

The vent plate 452 according to an embodiment may have a form of a flat plate. In an embodiment, a thickness of the vent plate 452 may be smaller than a thickness of the metal plate corresponding to the fifth surface 426 of the case 420. In an embodiment, the vent plate 452 may be coupled to the metal plate corresponding to the fifth surface 426 by any of various types of coupling methods, such as any of welding, bolting, fitting, and the like. In an embodiment of the present disclosure, the vent plate 452 may be inserted into the vent hole 451, and a peripheral surface of the vent plate 452 may be coupled to an inner side surface of the vent hole 451.

The cooling module 160 is disposed to face the fourth surface 425 of the case 420 parallel to the fifth surface 426 of the case 420 in which the cell vent 450 is disposed. The cooling module 160 may be located between the battery cells 401 and a cover 40 in the pack housing 20. The electrode assembly 210 is located between the fourth surface 425 and the fifth surface 426. The fifth surface 426 is disposed farther from the cooling module 160 than the fourth surface 225.

The cooling module 160 may include refrigerant channels 161 and 163 and membranes 174 corresponding to the refrigerant channels 161 and 163. For example, the refrigerant channels may include first and second refrigerant channels 161 and 163. However, the number of refrigerant channels in an embodiment shown in FIG. 14 is merely an example, and a cooling module according to an embodiment of the present disclosure may include a single refrigerant channel or may include three or more refrigerant channels.

The first and second refrigerant channels 161 and 163 may be located on an upper side of a cell stack including the plurality of battery cells 401 and may extend in the first direction. The first and second refrigerant channels 161 and 163 may be disposed spaced apart from each other in the second direction. The first refrigerant channel 161 and the second refrigerant channel 163 may be connected to each other at an end portion in the first direction such that a refrigerant may flow.

The first and second refrigerant channels 161 and 163 may include through holes 170 through which the refrigerant triggers 460 and 465 pass. The through hole 170 may be formed in a surface of the cooling module 160 facing the battery cell 401.

The membranes 174 may be attached to the first and second refrigerant channels 161 and 163 while blocking the through holes 170. In an embodiment, a thickness of each membrane 174 may be thinner than a thickness of each of the metal plates 188 of the refrigerant channels 161 and 163 such that the membranes 174 may be easily ruptured by the refrigerant triggers 460 and 465.

If a thermal runaway phenomenon occurs in one battery cell 401 among the plurality of battery cells 401 accommodated in the pack housing 20 and, thus, gas is discharged to the outside of the battery cell 401 through the cell vent 450 of the battery cell 401, the battery cell 401 may move toward the cooling module 160.

The refrigerant triggers 460 and 465 are pushed by the battery cell 401 moving toward the cooling module 160 and press the cooling module 160, and, accordingly, the refrigerant accommodated in the refrigerant channels 161 and 163 may flow out of the cooling module 160.

The battery pack 10C may further include a bus bar 455 which electrically connects a plurality of battery cells 401. A plurality of bus bars 455 may be provided. Each of the bus bars 455 may connect a pair of neighboring battery cells 401 in series or parallel. The bus bar 455 may be joined to the terminal 440, for example, by welding.

The refrigerant triggers 460 and 465 may be located between the battery cell 401 and the cooling module 160. Among the refrigerant triggers 460 and 465, a first refrigerant trigger 460 corresponding to the membrane 174 of the first refrigerant channel 161 may include a pin fixed to the fourth surface 425 of the battery cell 401 and protruding toward the membrane 174 of the first refrigerant channel 161.

Among the refrigerant triggers 460 and 465, a second refrigerant trigger 465 corresponding to the membrane 174 of the second refrigerant channel 163 may include a pin fixed to the bus bar 455 and protruding toward the membrane 174 of the second refrigerant channel 163. In an embodiment, a length of the first refrigerant trigger 460 may be longer than a length of the second refrigerant trigger 465.

The refrigerant triggers 460 and 465 are pushed by the battery cell 401 moving toward the cooling module 160 and press the cooling module 160, and, accordingly, the refrigerant accommodated in the refrigerant channels 161 and 163 may flow out of the cooling module 160.

In an embodiment, as shown in FIG. 14, upper ends of the refrigerant triggers 460 and 465 and the membranes 174 are spaced apart from each other, but in another embodiment of the present disclosure, the upper ends of the refrigerant triggers may also be in contact with the membranes even if thermal runaway does not occur.

When the battery cell 401 moves toward the cooling module 160 in the pack housing 20, the refrigerant triggers 460 and 465 move in a same direction as the movement direction of the battery cell 401, and, as shown in FIG. 15, the corresponding membranes 174 may be pressed and ruptured into a plurality of pieces 174-1 and 174-2 by the refrigerant triggers 460 and 465.

Accordingly, the refrigerant accommodated in the refrigerant channels 161 and 163 may flow out in the direction of gravity and pour into the battery cell 401. Accordingly, a fire in the battery pack 10C may be extinguished early, the spread of the fire may be delayed, and the fire may not spread into a large fire.

In an embodiment of the present disclosure, when the battery cell 401 moves toward the cooling module 160 in the pack housing 20 and the refrigerant triggers 460 and 465 move in the same direction as the movement direction of the battery cell 401, the membranes 174 may be separated from the refrigerant channels 161 and 163 instead of being pressed and ruptured by the refrigerant triggers 460 and 465. In further detail, the membranes 174 may be separated from the refrigerant channels 161 and 163 while joint portions between the refrigerant channels 161 and 163 and the membranes 174 rupture. In this case, through holes 170 may open and the refrigerant accommodated in the refrigerant channels 161 and 163 may pour into the battery cell 401.

In an embodiment, a cross-sectional shape of each of the refrigerant triggers 460 and 465 may be, for example, a star shape, as shown in FIG. 17. The refrigerant triggers 460 and 465 may each include core portions 461 and 466 extending in the third direction, and wall portions 462 and 467 radially extending from the core portions 461 and 466.

Even if the membranes 174 rupture by the refrigerant triggers 460 and 465, the through holes 170 are covered by the membranes 174 and thus may not sufficiently open. However, a flow path ST is formed between neighboring wall portions 462 and 467, and the refrigerant accommodated in the refrigerant channels 161 and 163 may quickly pour into the battery cell 401.

The cooling module 160 may further include fire extinguishing agent channels 166 and 168 and membranes 184 corresponding to the fire extinguishing agent channels 166 and 168. For example, the fire extinguishing agent channels may include first and second fire extinguishing agent channels 166 and 168. However, a number of fire extinguishing agent channels, in an embodiment shown in FIG. 14, is merely an example, and a cooling module according to an embodiment of the present disclosure may include a single fire extinguishing agent channel or may include three or more fire extinguishing agent channels.

The first and second fire extinguishing agent channels 166 and 168 may be located on an upper side of a cell stack including the plurality of battery cells 401 and may extend in the first direction. The first and second fire extinguishing agent channels 166 and 168 may be disposed spaced apart from each other in the second direction. The plurality of refrigerant channels 161 and 163 and the plurality of fire extinguishing agent channels 166 and 168 may be alternately disposed in the second direction.

The first and second fire extinguishing agent channels 166 and 168 may include through holes 180 through which the fire extinguishing agent triggers 470 and 475 pass. The through hole 180 may be formed in a surface of the cooling module 160 facing the battery cell 401.

The membranes 184 may be attached to the first and second fire extinguishing agent channels 166 and 168 while blocking the through holes 180. In an embodiment, a thickness of each membrane 184 may be thinner than a thickness of each of the metal plates 188 of the fire extinguishing agent channels 166 and 168 such that the membranes 184 may be easily ruptured by the fire extinguishing agent triggers 470 and 475.

If the thermal runaway phenomenon occurs in one battery cell 401 among the plurality of battery cells 401 accommodated in the pack housing 20 and, thus, gas is discharged to the outside of the battery cell 401 through the cell vent 450 of the battery cell 401, the battery cell 401 may move toward the cooling module 160.

The fire extinguishing agent triggers 470 and 475 are pushed by the battery cell 401 moving toward the cooling module 160 and press the cooling module 160, and, accordingly, the fire extinguishing agent accommodated in the fire extinguishing agent channels 166 and 168 may flow out of the cooling module 160.

The fire extinguishing agent triggers 470 and 475 may be located between the battery cell 401 and the cooling module 160. Among the fire extinguishing agent triggers 470 and 475, a first fire extinguishing agent trigger 470 corresponding to the membrane 184 of the first fire extinguishing agent channel 166 may include a pin fixed to the bus bar and protruding toward the membrane 184 of the first fire extinguishing agent channel 166.

Among the fire extinguishing agent triggers 470 and 475, a second fire extinguishing agent trigger 475 corresponding to the membrane 184 of the second fire extinguishing agent channel 168 may include a pin fixed to the fourth surface 425 of the battery cell 401 and protruding toward the membrane 184 of the second fire extinguishing agent channel 168.

In an embodiment, a length of the first fire extinguishing agent trigger 470 may be shorter than a length of the second fire extinguishing agent trigger 475.

The fire extinguishing agent triggers 470 and 475 are pushed by the battery cell 401 moving toward the cooling module 160 and press the cooling module 160, and, accordingly, the fire extinguishing agent accommodated in the fire extinguishing agent channels 166 and 168 may flow out of the cooling module 160.

In an embodiment, as shown in FIG. 14, upper ends of the fire extinguishing agent triggers 470 and 475 and the membranes 184 are spaced apart from each other, but in another embodiment of the present disclosure, the upper ends of the fire extinguishing agent triggers may also be in contact with the membranes even when thermal runaway does not occur.

When the battery cell 401 moves toward the cooling module 160 in the pack housing 20, the fire extinguishing agent triggers 470 and 475 move in a same direction as the movement direction of the battery cell 401, and, as shown in FIG. 16, the corresponding membranes 184 may be pressed and ruptured into a plurality of pieces 184-1 and 184-2 by the fire extinguishing agent triggers 470 and 475.

Accordingly, the fire extinguishing agent accommodated in the fire extinguishing agent channels 166 and 168 may flow out in the direction of gravity and pour into the battery cell 401. Accordingly, the fire in the battery pack 10C may be extinguished early, the spread of the fire may be delayed, and the fire may not spread into a large fire.

In another embodiment of the present disclosure, when the battery cell 401 moves toward the cooling module 160 in the pack housing 20 and the fire extinguishing agent triggers 470 and 475 move in the same direction as the movement direction of the battery cell 401, the membranes 184 may be separated from the fire extinguishing agent channels 166 and 168 instead of being pressed and ruptured by the fire extinguishing agent triggers 470 and 475. In further detail, the membranes 184 may be separated from the fire extinguishing agent channels 166 and 168 while joint portions between the fire extinguishing agent channels 166 and 168 and the membranes 184 rupture. In this case, the through holes 180 may open and the fire extinguishing agent accommodated in the fire extinguishing agent channels 166 and 168 may pour into the battery cell 401.

Although not shown in the drawing, a cross-sectional shape of each of the fire extinguishing agent triggers 470 and 475 may be the same as the cross-sectional shape of each of the refrigerant triggers 460 and 465 described with reference to FIG. 17. In this case, the fire extinguishing agent accommodated in the fire extinguishing agent channels 166 and 168 may quickly pour into the battery cell 401.

The cooling plate 190 may be disposed to face the fifth surface 426 of the plurality of battery cells 401 constituting a cell stack in the pack housing 20 and may absorb heat from the battery cell 401. The cooling plate 190 may include a plurality of cooling channels 191 through which a refrigerant flows therein. In an embodiment, a side surface 195 of the cooling plate 190 along the third direction (for example, the Z-axis direction) may be in contact with the fifth surface 426 of the case 420 of the battery cell 401, and another side surface 196 of the cooling plate 190 may be in contact with and supported by a bottom plate 22 of a base 21.

While the refrigerant channels 161 and 163 of the cooling module 160 are spaced apart from the case 420 of the battery cell 401, the cooling plate 190 may be in contact with the case 420 of the battery cell 401 and, thus, heat dissipation of the battery cell 401 may be further promoted by heat conduction.

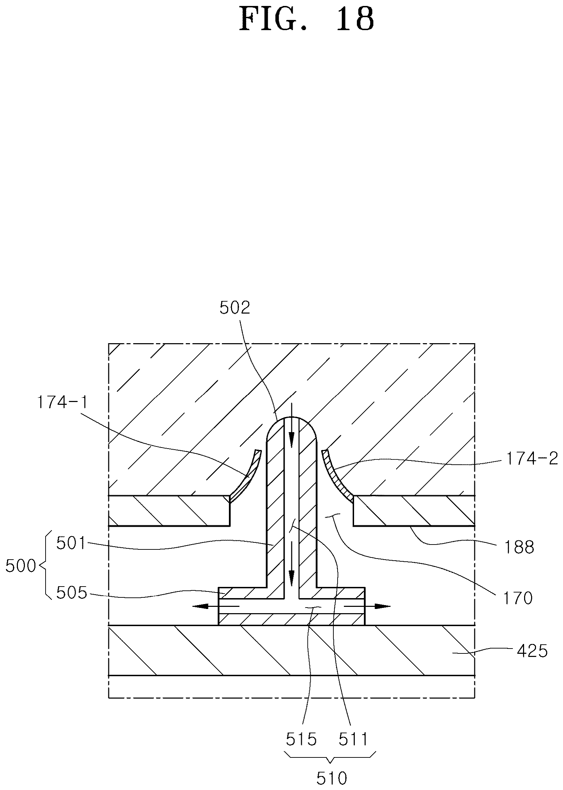

FIG. 18 is a cross-sectional view showing a modified example of the refrigerant trigger in FIG. 14, and is a view showing a state in which the membrane ruptures.

Referring to FIGS. 14 and 18, a refrigerant trigger 500 shown in FIG. 18 includes a body portion 501 extending in the third direction, and a flange portion 505 fixed to the fourth surface 425 of the case 420, connected to the body portion 501, and expanded to have a diameter larger than a diameter of the body portion 501.

The refrigerant trigger 500 includes a refrigerant trigger flow path 510 through which a fluid may flow therein. The refrigerant trigger flow path 510 includes a first flow path portion 511 extending in a longitudinal direction of the body portion 501, and a second flow path portion 515 extending in a direction orthogonal to the longitudinal direction of the first flow path portion 511 in the flange portion 505.

An end of the first flow path portion 511 is open toward an end 502 of the body portion 501, and another end of the first flow path portion 511 is connected to the second flow path portion 515. The second flow path portion 515 is open toward an outer surface of the flange portion 505.

When the battery cell 401 moves toward the cooling module 160 in the pack housing 20 (see FIG. 1), the refrigerant trigger 500 moves in a same direction as the movement direction of the battery cell 401, and, as shown in FIG. 18, the corresponding membrane 174 may be pressed and ruptured into a plurality of pieces 174-1 and 174-2 by the refrigerant trigger 500.

Accordingly, the refrigerant accommodated in the refrigerant channel 161 may flow out in the direction of gravity and pour into the battery cell 401, a fire in the battery pack 10C may be extinguished early, the spread of the fire may be delayed, and the fire may not spread into a large fire.

Even if the membrane 174 ruptures by the refrigerant trigger 500, the through hole 170 is covered by the membrane 174 and thus may not sufficiently open. However, the end 502 of the body portion 501 is inserted into the refrigerant channel 161 and the flange portion 505 is located outside the refrigerant channel 161, and the refrigerant may be easily discharged to the battery cell 401 outside the refrigerant channel 161 through the first flow path portion 511 and the second flow path portion 515 of the refrigerant trigger flow path 510.

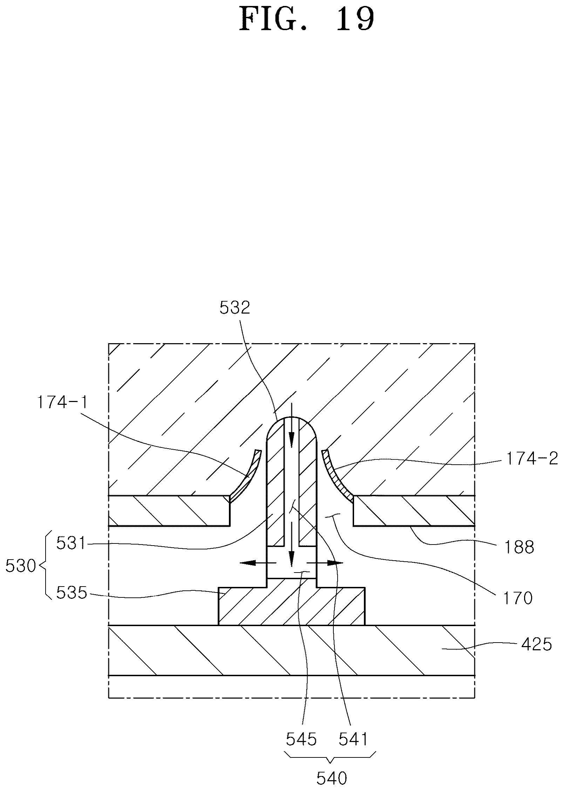

FIG. 19 is a cross-sectional view showing another modified example of the refrigerant trigger in FIG. 14, and is a view showing a state in which the membrane ruptures.

Referring to FIGS. 14 and 19, a refrigerant trigger 530 shown in FIG. 19 includes a body portion 531 extending in the third direction, and a flange portion 535 fixed to the fourth surface 425 of the case 420, connected to the body portion 531, and expanded to have a diameter larger than a diameter of the body portion 531.

The refrigerant trigger 530 includes a refrigerant trigger flow path 540 through which a fluid may flow therein. The refrigerant trigger flow path 540 includes a first flow path portion 541 extending in a longitudinal direction of the body portion 531, and a second flow path portion 545 extending in a direction orthogonal to the longitudinal direction of the first flow path portion 541 in the body portion 531.

An end of the first flow path portion 541 is open toward an end 532 of the body portion 531, and another end of the first flow path portion 541 is connected to the second flow path portion 545. The second flow path portion 545 is open toward an outer surface of the body portion 531.

When the battery cell 401 moves toward the cooling module 160 in the pack housing 20 (see FIG. 1), the refrigerant trigger 530 moves in a same direction as the movement direction of the battery cell 401, and, as shown in FIG. 19, the corresponding membrane 174 may be pressed and ruptured into a plurality of pieces 174-1 and 174-2 by the refrigerant trigger 530.

Accordingly, the refrigerant accommodated in the refrigerant channel 161 may flow out in the direction of gravity and pour into the battery cell 401, a fire in the battery pack 10C may be extinguished early, the spread of the fire may be delayed, and the fire may not spread into a large fire.

In an embodiment, even if the membrane 174 ruptures by the refrigerant trigger 530, the through hole 170 is covered by the membrane 174 and thus may not sufficiently open. However, the end 532 of the body portion 531 is inserted into the refrigerant channel 161 and the second flow path portion 545 is located outside the refrigerant channel 161, and the refrigerant may be easily discharged to the battery cell 401 outside the refrigerant channel 161 through the first flow path portion 541 and the second flow path portion 545 of the refrigerant trigger flow path 540.

Like the refrigerant triggers 500 and 530 shown in FIGS. 18 and 19, a battery pack according to another embodiment of the present disclosure may include a fire extinguishing agent trigger including a fire extinguishing agent trigger flow path through which a fluid may flow therein. In an embodiment, the fire extinguishing agent trigger including the fire extinguishing agent trigger flow path is similar to configurations of the refrigerant triggers 500 and 530 shown in FIGS. 18 and 19, and overlapping descriptions may be omitted.

In one or more embodiments, if a membrane attached to a fire extinguishing agent channel ruptures by the fire extinguishing agent trigger, the fire extinguishing agent accommodated in the fire extinguishing agent channel may be easily discharged to a battery cell outside the fire extinguishing agent channel through the fire extinguishing agent trigger path.

According to one or more embodiments of the present disclosure, even if a thermal runaway phenomenon occurs in some of a plurality of battery cells of a battery pack, a cooling module ruptures and a refrigerant is input into the battery cells in which thermal runaway is occurring, a fire can be extinguished early, the spread of the fire can be delayed, and the fire can be prevented or substantially prevented from spreading into a large fire.

According to the battery pack according to one or more embodiments of the present disclosure, which further includes a fire extinguishing agent supply unit, a fire extinguishing agent is input along with the refrigerant into the battery cells in which the thermal runaway phenomenon has occurred, and the fire can be extinguished more quickly and the spread of the fire can be further delayed.

According to one or more embodiments of the present disclosure, no additional space is required for a fire suppression unit of the battery cells other than a space for a unit for cooling the plurality of battery cells in the battery pack, and the energy density of the battery pack can be enhanced.

However, aspects and effects obtainable through the present disclosure are not limited to the above aspects and effects, and other aspects and technical effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. A battery pack comprising:
a pack housing;
a battery cell accommodated in the pack housing and comprising a cell vent on a first side;
a cooling module facing a second side of the battery cell and accommodating a refrigerant therein; and
a refrigerant trigger located between the battery cell and the cooling module and configured to press the cooling module such that the refrigerant flows out of the cooling module if the battery cell moves toward the cooling module by gas discharged to an outside of the battery cell through the cell vent.

2. The battery pack as claimed in claim 1, wherein the pack housing comprises a base comprising a bottom plate facing the cell vent, and a cover coupled to the base, and
the cooling module is located between the battery cell and the cover in the pack housing.

3. The battery pack as claimed in claim 2, wherein the battery cell is arranged under the cooling module such that the refrigerant flowing out of the cooling module pours into the battery cell by gravity.

4. The battery pack as claimed in any preceding claim, wherein the cooling module comprises a refrigerant channel defining a flow path through which the refrigerant flows and comprising a through hole through which the refrigerant trigger passes, and a membrane that is attached to the refrigerant channel while blocking the through hole and configured to rupture when pressed by the refrigerant trigger.

5. The battery pack as claimed in claim 4,
(A) wherein the refrigerant trigger comprises a refrigerant trigger flow path through which a fluid flows therein, and
the refrigerant is discharged to the outside of the refrigerant channel through the refrigerant trigger flow path when the membrane ruptures by the refrigerant trigger;
and/or
(B) wherein the refrigerant channel comprises a metal plate, and
a thickness of the membrane is thinner than a thickness of the metal plate;
and/or
(C)wherein the battery pack comprises a plurality of battery cells,
a plurality of refrigerant triggers are arranged for each of the battery cells, and
the cooling module comprises a number of membranes corresponding one-to-one to the plurality of refrigerant triggers.

6. The battery pack as claimed in any of claims 1 to 3, wherein the cooling module comprises a refrigerant channel defining a flow path through which the refrigerant flows and comprising a through hole through which the refrigerant trigger passes, and a membrane that is attached to the refrigerant channel while blocking the through hole and is configured to be separated from the refrigerant channel when pressed by the refrigerant trigger.

7. The battery pack as claimed in any preceding claim, wherein the battery cell further comprises a hexahedral-shaped case and a terminal protruding from the case,
the refrigerant trigger is fixed to one of six surfaces of the case facing the cooling module,
the cell vent and the terminal are located on another surface parallel to the one of the six surfaces of the case and located farther from the cooling module than the one surface.

8. The battery pack as claimed in any of claims 1 to 6, wherein the battery cell further comprises a hexahedral-shaped case and a terminal protruding from one of six surfaces of the case facing the cooling module,
the cell vent is located on another surface parallel to the one of the six surfaces of the case and located farther from the cooling module than the one surface,
the battery pack further comprises a bus bar coupled to the terminal, and
the refrigerant trigger is fixed to the bus bar and protrudes toward the cooling module.

9. The battery pack as claimed in claim 8, further comprising a cooling plate facing the another surface and configured to absorb heat from the battery cell.

10. The battery pack as claimed in any preceding claim, further comprising:
a fire extinguishing agent supplier in which a fire extinguishing agent is accommodated; and
a fire extinguishing agent trigger that is located between the battery cell and the fire extinguishing agent supplier and configured to press the fire extinguishing agent supplier such that the fire extinguishing agent flows out of the fire extinguishing agent supplier if the battery cell moves toward the cooling module by gas discharged to the outside of the battery cell through the cell vent; and, optionally,
wherein the fire extinguishing agent comprises nitrogen gas.

11. The battery pack as claimed in claim 10, wherein the cooling module comprises the fire extinguishing agent supplier.

12. The battery pack as claimed in claim 10 or claim 11, wherein the fire extinguishing agent supplier comprises a fire extinguishing agent channel defining a flow path through which the fire extinguishing agent flows and comprising a through hole through which the fire extinguishing agent trigger passes, and a membrane that is attached to the fire extinguishing agent channel while blocking the through hole and configured to rupture when pressed by the fire extinguishing agent trigger.

13. The battery pack as claimed in claim 12,
(A) wherein the fire extinguishing agent trigger comprises a fire extinguishing agent trigger flow path through which a fluid flows therein, and
the fire extinguishing agent is discharged to an outside of the fire extinguishing agent channel through the fire extinguishing agent trigger flow path if the membrane ruptures by the fire extinguishing agent trigger;
and/or
(B) wherein the fire extinguishing agent channel comprises a metal plate, and
a thickness of the membrane of the fire extinguishing agent supplier is thinner than a thickness of the metal plate.

14. The battery pack as claimed in claim 12 or claim 13, wherein a plurality of fire extinguishing agent channels are spaced apart from each other,
the cooling module comprises a plurality of refrigerant channels that are spaced apart and form a flow path through which the refrigerant flows, and
the plurality of fire extinguishing agent channels and the plurality of refrigerant channels are alternately arranged;
and, optionally,
wherein the cooling module comprises a connecting portion that connects a pair of refrigerant channels spaced apart with the fire extinguishing agent channel therebetween, and
the connecting portion includes a connecting portion through hole arranged in a straight line with the through hole of the fire extinguishing agent channel such that the fire extinguishing agent trigger passes therethrough.

15. The battery pack as claimed in any of claims 12 to 14, wherein the battery cell further comprises a hexahedral-shaped case and a terminal protruding from one of six surfaces of the case facing the fire extinguishing agent supplier,
the cell vent is arranged on another surface parallel to the one of the six surfaces of the case and located farther from the fire extinguishing agent supplier than the one surface,
the battery pack further comprises a bus bar coupled to the terminal, and
the fire extinguishing agent trigger is fixed to the bus bar and protrudes toward the cooling module.
